(19) Europäisches Patentamt / European Patent Office / Office européen des brevets

(11) **EP 3 572 794 B1**

(12) **FASCICULE DE BREVET EUROPEEN**

(45) Date de publication et mention de la délivrance du brevet:
**07.09.2022 Bulletin 2022/36**

(21) Numéro de dépôt: **19175470.4**

(22) Date de dépôt: **20.05.2019**

(51) Classification Internationale des Brevets (IPC):
**G01N 21/31** (2006.01)    **G01J 3/28** (2006.01)

(52) Classification Coopérative des Brevets (CPC):
**G01N 21/31;** G01J 2003/2873; G01N 21/65;
G01N 2021/3196; G01N 2021/6419;
G01N 2021/6421

(54) **PROCÉDÉ DE DÉTECTION D'UN COMPOSÉ DANS UNE COMPOSITION À IDENTIFIER ET DISPOSITIF DE DÉTECTION**

DETEKTIONSVERFAHREN EINER KOMPONENTE IN EINER ZU IDENTIFIZIERENDEN ZUSAMMENSETZUNG, UND DETEKTIONSVORRICHTUNG

METHOD FOR DETECTING A COMPOUND IN A COMPOSITION TO BE IDENTIFIED AND DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2018 FR 1854468**

(43) Date de publication de la demande:
**27.11.2019 Bulletin 2019/48**

(73) Titulaire: **Commissariat à l'énergie atomique et aux énergies alternatives**
**75015 Paris (FR)**

(72) Inventeurs:
• **THEVENIN, Mathieu**
**91400 ORSAY (FR)**
• **FRENCH, Robert**
**21000 DIJON (FR)**
• **SIMIC, Vesna**
**92370 CHAVILLE (FR)**

(74) Mandataire: **Brevalex**
**95, rue d'Amsterdam**
**75378 Paris Cedex 8 (FR)**

(56) Documents cités:
EP-A2- 0 476 192     EP-A2- 0 816 829
WO-A1-2012/147551     US-A1- 2016 091 417
US-A1- 2018 059 011

• BLANCO M ET AL: "NIR spectroscopy: a rapid-response analytical tool", TRAC TRENDS IN ANALYTICAL CHEMI, ELSEVIER, AMSTERDAM, NL, vol. 21, no. 4, avril 2002 (2002-04), pages 240-250, XP004371242, ISSN: 0165-9936, DOI: 10.1016/S0165-9936(02)00404-1
• POREP JAN U ET AL: "On-line application of near infrared (NIR) spectroscopy in food production", TRENDS IN FOOD SCIENCE AND TECHNOLOGY, ELSEVIER SCIENCE PUBLISHERS, GB, vol. 46, no. 2, 8 octobre 2015 (2015-10-08), pages 211-230, XP029309362, ISSN: 0924-2244, DOI: 10.1016/J.TIFS.2015.10.002

**Description**

**DOMAINE TECHNIQUE**

L'invention concerne l'identification de composés dans une composition à identifier.
L'invention a ainsi plus particulièrement pour objet un procédé de détection de la présence d'au moins un composé dans une composition à identifier et d'un système de détection de la présence d'au moins un composé dans une composition à identifier

**ÉTAT DE LA TECHNIQUE ANTÉRIEURE**

Afin de permettre le contrôle de substances prohibées, telles que les drogues, les poisons et les explosifs, il est parfois nécessaire de vérifier la présence de certains composés dans des compositions à identifier. Cette vérification, ou détection, est notamment nécessaire sur les scènes de crimes, saisies de douanes dans les aéroports, les ports de marchandises, terrains d'opérations extérieures (suspicion de présence de chimiques de guerre ou d'atelier d'engins explosifs artisanaux) ou encore dans le cadre de lettres/colis douteux afin d'empêcher l'importation de ces substances prohibées, prévenir leur usage ou encore détecter leur présence.
Différentes approches existent pour permettre une telle détection. Un premier type d'approche, connu notamment des travaux de N.A. Ngo-Thi et de ses coauteurs publiés en août 2003 dans la revue scientifique « Journal of Molecular Structure » numéro 661-662 pages 371-380 et des travaux de D. Helm et de ses coauteurs publiés en septembre 1990 dans la revue scientifique « Journal of General Microbiology » numéro 137 pages 69-79, est basée sur l'analyse de la dérivée de spectres infrarouges pour permettre une détection du composé.
Cette première approche utilise une comparaison par morceaux, dits « cluster », des spectres à partir de données connues et un regroupement des spectres présentant des similitudes entre eux. Néanmoins, si cette approche présente l'avantage de ne nécessiter qu'un type de mesure, spectroscopies infrarouges dans le cas des deux exemples donnés, elle n'est néanmoins pas adaptée pour les compositions complexes puisqu'elle est basée sur une séparation linéaire des spectres.
Une deuxième approche, notamment utilisée par les nez électroniques, consiste à combiner plusieurs capteurs spécifiques afin d'identifier le ou les composés de la composition. Ainsi cette deuxième approche requiert un nombre important de capteurs, ceux-ci sont spécifiques à un ou plusieurs composés, et utilise un système de classifieur à réseaux de neurones pour analyser les différents signaux de capteur et ainsi identifier les composés de la composition à identifier. Cette deuxième approche est donc relativement complexe à mettre en œuvre et spécialisée pour un nombre réduit de substances.
Une troisième approche, notamment connue du document US 6379920, est basée, de la même manière que la première approche, sur l'utilisation de spectre infra-rouge pour déterminer la présence de bactéries. Selon le principe de cette troisième approche, les spectres sont dérivés afin d'identifier les pics d'intérêt et sont comparés à des spectres de référence des composés à détecter. Néanmoins, si cette troisième approche permet d'identifier les composés d'une composition comprenant un mélange de plusieurs composés, elle ne permet pas de faire la distinction de composés très proches (interférant) ou encore d'identifier des composés présents à une faible quantité. Une approche similaire est divulguée dans le document US2018/0059011 A1 basée sur des mesures de corrélation entre des pics d'intérêt identifiés dans un spectre d'échantillon et des pics associés à des composés connus.
Il n'existe donc pas à l'heure actuelle d'approche pour la détection de composés dans une composition à identifier, ceci à base d'un seul type de mesures, tel qu'une mesure de spectroscopie infrarouge, qui permette la détection de composés dans une composition à identifier alors que ces composés sont présents en faible quantité ou masqués par la présence de composé proche.

**EXPOSÉ DE L'INVENTION**

L'invention vise à remédier à ces inconvénients et a ainsi pour but de fournir un procédé de détection de la présence de composé à partir d'un seul type de mesure et qui permette la détection de composés dans une composition à identifier que ces composés soient présents en faible quantité ou masqués par la présence de composés proches non prohibés.
L'invention concerne à cet effet un procédé de détection de la présence d'au moins un composé dans une composition à identifier au moyen d'un spectromètre,
le procédé comprenant les étapes suivantes :

- réalisation d'au moins une mesure de spectrométrie d'au moins un échantillon de référence comportant ledit au moins un composé et fourniture à partir de ladite mesure de spectrométrie d'au moins un premier spectre de référence à une première résolution,

- identification, pour le ou chacun des composés, d'au moins un premier pic d'intérêt à partir dudit ou desdits au moins un premier spectre de référence correspondant audit composé, le pic d'intérêt ayant une longueur d'onde d'intérêt,
- extraction, pour le ou chaque composé et le ou chaque premier pic d'intérêt identifié pour ledit composé, de premiers points caractéristiques de référence dudit au moins un premier spectre de référence dans une plage de longueurs d'onde d'intérêt correspondant à l'au moins un premier pic d'intérêt et comprenant ladite première longueur d'onde d'intérêt,
- réalisation d'une mesure de spectrométrie de la composition à identifier et fourniture d'au moins un premier spectre de mesure,
- pour le ou chaque composé et pour le ou chaque premier pic d'intérêt identifié pour ledit composé, extraction de premier points caractéristiques de mesure du au moins un premier spectre de mesure dans la plage de longueurs d'onde d'intérêt comprenant ladite première longueur d'onde d'intérêt,
- pour le ou chaque composé et le ou chaque pic d'intérêt identifié, réalisation d'un calcul de corrélation entre les premiers points caractéristiques de référence et les premiers points caractéristiques de mesure et détermination d'une première valeur de corrélation de la composition pour ledit composé et ledit pic d'intérêt,
- détection de la présence ou non du composé dans la composition à identifier à partir de la première valeur de corrélation obtenue pour l'au moins un composé et de l'au moins un premier pic d'intérêt identifié pour ledit composé.

Ainsi, avec un tel procédé, il est possible d'identifier un composé dans une composition ceci avec un seul type de mesure. De plus, l'utilisation de plages de longueurs d'onde d'intérêt correspondant chacune à un pic d'intérêt du composé et le calcul de valeurs de corrélation pour chacune des plages de longueurs d'onde d'intérêt permettent d'aboutir à une bonne distinction entre les composés proches et le composé de référence à détecter, ceci même pour des concentrations faibles dudit composé de référence. On notera, de plus, que de tels calculs de corrélation sont simples à mettre en œuvre et ne nécessitent pas d'utiliser des algorithmes complexes tels que ceux mis en œuvre pour les nez électroniques.

Bien entendu, conformément aux connaissances générales de l'homme du métier, les notions de longueurs d'onde et d'énergie sont interdépendantes et interchangeables. En effet, l'énergie et la longueur d'onde d'un rayonnement sont liées par relation de Planck-Einstein $E = (h \times c)/\lambda$ et sont donc équivalente. Ainsi, s'il est généralement fait mention de la longueur d'onde dans le cadre de mesures de spectroscopie et dans le cadre de l'invention, il aurait également pu être fait mention, sans modifier la portée de l'invention et l'enseignement de ce document, d'énergies, voire de nombres d'onde.

Le procédé de détection peut comprendre comprenant en outre une étape de calcul de valeurs caractéristiques du au moins un premier spectre de référence à partir d'une fonction de calcul caractéristique, et une étape de calcul de premières valeurs caractéristiques du au moins un premier spectre de mesure à partir de la fonction de calcul caractéristique,

dans lequel les points caractéristiques de référence extraits lors de l'étape d'extraction de premiers points caractéristiques de référence sont extraits à partir des premières valeurs calculées lors de l'étape de calcul de valeurs caractéristiques du au moins un premier spectre de référence correspondant à ladite plage de longueurs d'onde d'intérêt,

et dans lequel les points caractéristiques de mesure extraits lors de l'étape d'extraction de points caractéristiques de mesure du au moins un premier spectre de mesure sont extraits à partir des valeurs calculées lors de l'étape de calcul de valeurs caractéristiques du au moins un premier spectre de mesure correspondant à ladite plage de longueurs d'onde d'intérêt.

Une telle étape de calcul de valeurs caractéristiques permet, par un choix adapté de la fonction de calcul caractéristique, d'optimiser la détection du composé à détecter.

La fonction de calcul caractéristique peut être une fonction dérivée.

Une telle fonction de dérivée permet d'exacerber les variations spectrales et permet ainsi de vérifier la bonne corrélation entre le spectre de mesure et le spectre de référence pour les plages de longueurs d'onde d'intérêts.

L'étape de calcul de valeur caractéristique du au moins un premier spectre de référence à partir d'une fonction de calcul caractéristique peut être préalable à l'étape d'identification, pour le ou chacune des composés d'au moins un premier pic d'intérêt, l'identification de l'au moins un premier pic d'intérêt étant réalisée à partir du résultat du calcul de valeurs caractéristiques.

De cette manière il est possible de bénéficier de l'avantage lié à la fonction de calcul caractéristique pour optimiser la détection du ou des pics d'intérêts.

Lors de l'étape de réalisation d'au moins une mesure de spectrométrie d'au moins un échantillon de référence, il peut être prévu une sous-étape de modification de la résolution de manière à fournir pour chaque échantillon de référence au moins un deuxième spectre de référence présentant une deuxième résolution distincte de la première résolution,

dans lequel lors de l'étape d'identification d'au moins un premier pic d'intérêt, il est également identifié pour l'au moins un premier composé au moins un deuxième pic d'intérêt à partir dudit ou desdits au moins un deuxième spectre de référence correspondant audit composé,

dans lequel lors de l'étape d'extraction de premiers points caractéristiques de référence, il est également extrait, pour le ou chaque composé et le ou chaque deuxième pic d'intérêt identifié pour ledit composé, des deuxièmes points caractéristiques de référence,

dans lequel lors de l'étape de réalisation d'une mesure de spectrométrie de la composition à identifier, il est prévu une sous-étape de modification de la résolution de manière à fournir au moins un deuxième spectre de mesure présentant la deuxième résolution,

dans lequel, lors de l'étape d'extraction de premier points caractéristiques de mesure, il est également extrait des deuxièmes points caractéristiques de mesure du au moins un deuxième spectre de mesure dans la plage de longueurs d'onde d'intérêt comprenant une deuxième longueur d'onde dudit au moins un deuxième pic d'intérêt,

dans lequel lors de l'étape réalisation d'un calcul de corrélation, pour le ou chaque composé, il est également réalisé un calcul de corrélation entre les deuxièmes points caractéristiques de référence et les deuxièmes points caractéristiques de mesure et déterminé une deuxième valeur de corrélation du composé pour ledit composé et ledit deuxième pic d'intérêt,

dans lequel lors de l'étape de détection de la présence ou non du composé dans la composition à identifier, ladite détection est réalisée partir d'au moins les premières valeurs de corrélation et les deuxièmes valeurs de corrélation obtenues pour l'au moins un composé et le ou les premiers et deuxièmes pics d'intérêt identifiés pour ledit composé.

De cette manière, il est possible de vérifier la bonne corrélation entre le spectre de mesure et le spectre de référence à plusieurs résolutions desdits spectres. La détection du composé s'en trouve donc améliorée.

Le spectromètre peut être sélectionné dans le groupe comprenant les spectromètres infra-rouge, les spectromètres Raman, les spectromètres de florescence X et les spectromètres gamma.

Le procédé de détection peut comprendre une étape d'étalonnage préalable à l'étape de réalisation d'une mesure de spectrométrie de la composition, ladite étape préalable d'étalonnage comprenant les sous-étapes suivantes :

- réalisation de mesures de spectroscopie d'une pluralité de compositions de tests connues et fourniture d'au moins un premier spectre de test pour chacune des compositions de test, pour le ou chaque composé, une première part desdites compositions de test comprenant ledit composé, une deuxième part desdites compositions de test étant dépourvue dudit composé, et
- pour le ou chaque composé, pour le ou chaque premier pic d'intérêt identifié pour ledit composé et pour chaque composition de test, extraction de premiers points caractéristiques de test du au moins un premier spectre de test correspondant à la composition de test dans la plage de longueurs d'onde comprenant ledit au moins un premier pic d'intérêt,
- pour le ou chaque composé, le ou chaque pic d'intérêt identifié et pour chaque composition de test, réalisation d'un calcul de corrélation entre les premiers points caractéristiques de référence et les premiers points caractéristiques de test et détermination d'une première valeur de corrélation de la composition de test pour ledit composé et ledit pic d'intérêt,

dans lequel, lors de la détection de la présence ou non du composé dans la composition à identifier, ladite détection est également basée sur les premières valeurs de corrélation des compositions de test obtenues lors de l'étape d'étalonnage.

Avec de tels composés test, il est possible de définir des seuils de détection particulièrement adaptés pour permettre une bonne détection du composé. On limite ainsi les risques de faux positif. On notera en particulier qu'un tel échantillon de composition de test, il est envisageable d'utiliser des classifieurs pour déterminer la présence ou non du composé à détecter.

L'étape de détection de la présence ou non du composé peut être réalisée à partir d'une machine à vecteurs de support.

Une telle machine à vecteurs de support est particulièrement adaptée pour la détection du composé à détecter.

Le procédé peut comprendre en outre, dans le cas où la présence du composé est détectée lors de l'étape de détection de la présence ou non du composé dans la composition à identifier, une étape d'estimation de la concentration du composé dans le composition à identifier,

dans lequel l'étape d'estimation de la concentration comprend les sous-étapes suivantes :

- calcul d'une somme de différences des valeurs du premier spectre de référence par les valeurs du premier spectre de mesure pour la ou l'ensemble des plages de longueurs d'onde d'intérêt dudit composé,
- estimation de la concentration du composé dans la composition à identifier à partir de la somme de différences du premier spectre de référence par le premier spectre de mesure pour la ou l'ensemble des plages de longueurs d'onde d'intérêt dudit composé.

Lors de l'étape de détection de la présence ou non du composé dans la composition il peut être fourni, en plus d'une indication de détection, au moins l'un parmi :

- un indice de confiance relatif à l'indication de détection donnée,
- une estimation d'une concentration du composé dans la composition.

L'invention a également pour objet un système de détection de la présence d'au moins un composé dans une composition à identifier comprenant :

- un spectromètre,
- une unité de traitement configurée pour traiter les mesures de spectrométrie fournies par le spectromètre,
- une unité de signalisation configurée pour signaler de la détection de l'au moins un composé,
  l'unité de traitement étant configurée pour mettre en œuvre un procédé de détection selon l'invention.

Un tel système de détection permet de mettre en œuvre un procédé selon l'invention et de bénéficier des avantages qui y sont liés.

L'unité de traitement peut comprendre, dans au moins une configuration de l'unité de traitement :

- au moins un module de détermination de pics d'intérêt, le ou chaque module de détermination de pics d'intérêt étant configuré pour déterminer un ou plusieurs pics d'intérêt et une à plusieurs plages de longueurs d'onde d'intérêt, chacune associée à chaque pic d'intérêt respectif d'au moins un premier spectre de référence,
- au moins un module d'extraction de points caractéristiques, chaque module d'extraction de points caractéristiques étant configuré pour extraire les points caractéristiques de référence de l'au moins un premier spectre de référence à une première résolution à partir des pics d'intérêts et des plages de longueurs d'onde d'intérêt fournies par le module de détermination de pics d'intérêt correspondant,
- un module de calcul adapté pour mémoriser les points caractéristiques de référence extraits par le ou chacun des modules d'extraction de points caractéristiques afin de permettre un calcul de corrélation avec les points caractéristiques de mesure, soit pour enregistrer dans l'unité de stockage les points caractéristiques de référence extraits, l'unité de traitement comprenant, une deuxième configuration de l'unité de traitement dans laquelle.
- l'au moins un module d'extraction de points caractéristiques est configuré pour extraire les points caractéristiques de mesure de l'au moins un premier spectre de mesure à une première résolution à partir des pics d'intérêts et des plages de longueurs d'onde d'intérêt de l'au moins un composé,
- le module de calcul est configuré pour, pour chaque composé de référence et le ou chaque pic d'intérêt identifié pour ledit composé, réaliser un calcul de valeur de corrélation entre les premiers points caractéristiques de référence dudit composé et les premiers points caractéristiques de mesure et déterminer une première valeur de corrélation de la composition pour ledit composé et ledit pic d'intérêt, le module de calcul étant également configuré pour détecter la présence ou non de chacun des composés de référence à partir de la première valeur de corrélation.

L'unité de traitement comprend une unité de stockage configurée pour stocker au moins l'un parmi :

- au moins un premier spectre de référence d'au moins un échantillon de référence comportant ledit au moins un composé,
- des valeurs caractéristiques de référence et les informations concernant au moins un premier pic d'intérêt obtenus au moyen d'au moins un premier spectre de référence d'au moins un échantillon de référence comportant ledit au moins un composé,
- des premiers points caractéristiques de référence et les plages de longueurs d'onde d'intérêt respectives correspondant à au moins un premier pic d'intérêt d'au moins un premier spectre de référence d'au moins un échantillon de référence comportant ledit au moins un composé,
- au moins un spectre de test d'au moins une composition de test,
- des valeurs caractéristiques de test d'au moins une composition, de test,
- des premiers points caractéristiques de test d'au moins une composition de test.

Une telle unité de stockage permet de mettre en œuvre le procédé de détection selon l'invention sans avoir à faire les mesures de référence à chaque fois, le résultat de ces mesures de référence étant stocké dans l'unité de stockage.

L'invention concerne en outre un support de données lisible par ordinateur sur lequel est enregistré un programme incluant les instructions pour exécuter des étapes du procédé de détection selon l'invention.

Un tel support de données permet la mise en œuvre d'un procédé selon l'invention et permet ainsi de bénéficier des avantages qui y sont liés.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 illustre un schéma fonctionnel d'un système de détection selon l'invention,
- la figure 2 illustre un schéma fonctionnel d'une unité de traitement d'un système de détection selon un premier mode de réalisation de l'invention, ladite unité de traitement étant dans un premier mode de fonctionnement,
- la figure 3 illustre un schéma fonctionnel d'une unité de traitement d'un système de détection selon un deuxième mode de réalisation de l'invention, ladite unité de traitement étant dans un premier mode de fonctionnement,
- la figure 4 illustre un schéma fonctionnel d'une unité de traitement du système de détection selon le premier mode de réalisation de l'invention, l'unité de traitement étant dans un deuxième mode de réalisation,
- la figure 5 illustre graphiquement le principe de détermination d'un indice de confiance selon le principe de l'invention,
- la figure 6 illustre graphiquement un exemple de mise en œuvre du procédé de détection pour la détection du DDT ceci pour divers compositions dont une première partie comporte du DDT dans une proportion variable et une deuxième partie est exempte de DDT,
- la figure 7 illustre graphiquement l'estimation d'une concentration du composé dans une composition telle qu'autorisée par l'invention,
- la figure 8 illustre graphiquement un exemple de premier spectre de référence tel qu'utilisé dans le cadre de l'invention,
- la figure 9 illustre graphiquement un exemple d'identification de premiers pics d'intérêt et de valeurs caractéristiques déterminés à partir du premier spectre de référence illustré sur la figure 5,
- la figure 10 illustre graphiquement une extraction de premiers points caractéristiques de référence du premier spectre de référence illustré sur la figure 8 et déterminés à partir des premiers pics d'intérêt identifiés et des valeurs caractéristiques déterminés à la figure 9,
- la figure 11 illustre graphiquement un exemple de premier spectre de mesure d'une composition à identifier selon le principe de l'invention,
- la figure 12 illustre graphiquement d'identification des valeurs caractéristiques déterminées à partir du premier spectre de mesure illustré sur la figure 9, ces valeurs caractéristiques étant comparées à celles déterminées pour le spectre de référence de la figure 8 et identifiées par la figure 9,
- la figure 13 illustre graphiquement la mise en correspondance des premiers valeurs caractéristiques de référence de la figure 8 avec les premières valeurs caractéristiques mesurées de la figure 12 ceci pour permettre le calcul de premières valeurs de corrélation de la composition pour ledit composé.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

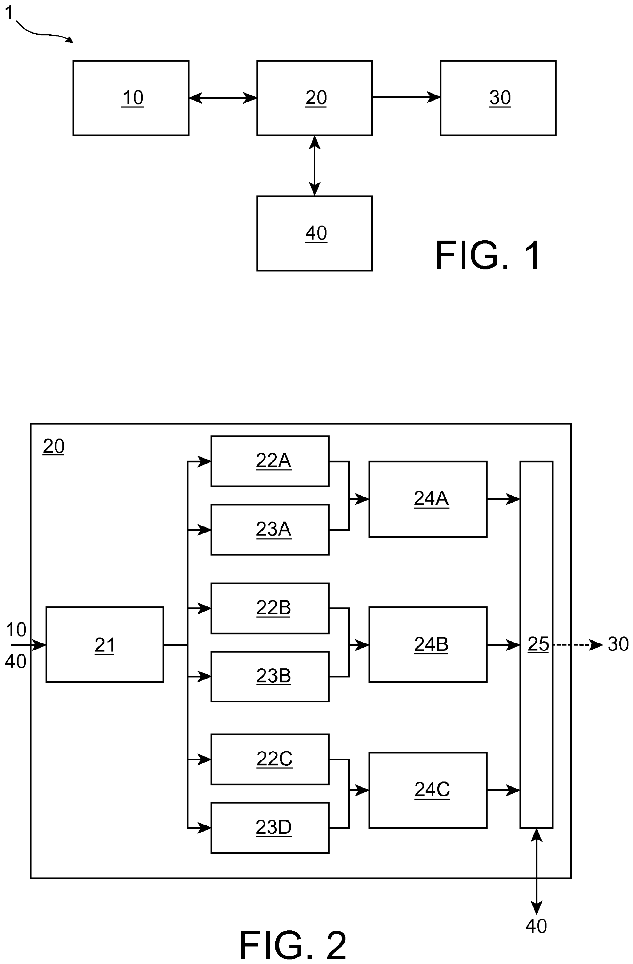

La figure 1 illustre un schéma fonctionnel d'un système de détection 1 d'au moins un composé présent dans une composition à identifier.

Un tel système de détection 1 comporte, comme illustré sur la figure 1 :

- un spectromètre 10 local ou déporté,
- une unité de traitement 20 configurée pour traiter les mesures de spectrométrie fournies par le spectromètre 10,
- une unité de signalisation 30 configurée pour signaler la détection de l'au moins un composé dans ladite composition à identifier,
- une unité de stockage 40 configurée pour stocker des données de référence, ces données de référence pouvant être soit le résultat des mesures de spectrométrie de chaque composé de référence, soit des données issues de ces mesures, comme par exemple des spectres de référence, des pics d'intérêt ou encore des points de de référence.

Le spectromètre 10 peut être, par exemple et de manière non limitative, sélectionné dans le groupe comportant :

- les spectromètres infra-rouge, tels que les spectromètres infra-rouge par transformée de Fourier,
- les spectromètres Raman,
- les spectromètres de fluorescence X,
- un spectromètre gamma.

L'unité de traitement 20 est configurée pour permettre la mise en œuvre d'un procédé selon l'invention à partir de mesures de spectrométrie de référence sur au moins un composé de référence et de mesures de spectrométrie de la composition à identifier.

Pour se faire, l'unité de traitement 20 présente une première configuration, dite d'étalonnage, dans laquelle elle est adaptée pour extraire des points caractéristiques de référence à partir de spectres de référence fournis par le spectromètre 10 ou par l'unité de stockage 40 dans laquelle lesdits spectres de référence ont été préalablement enregistrés.

La figure 2 illustre un schéma fonctionnel de cette première configuration de l'unité de traitement 20, ce schéma montrant des modules 21 ; 22A, 22B, 22C, 23A, 23B, 23C, 24A, 24B, 24C, 25 configurés pour autoriser une telle détermination. Ainsi, selon un premier mode de réalisation de l'invention, l'unité de traitement 20 peut comporter, dans cette première configuration, les modules suivants :

- un module de modification de résolution 21 configuré pour fournir des spectres de référence à différentes résolutions à partir de mesures de spectrométrie d'au moins un composé de référence, lesdites mesures ayant été obtenues par une mesure de spectroscopie réalisée au moyen du spectromètre 10 ou, éventuellement, par l'unité de stockage, le module de modification 21 étant adapté pour interpoler et/ou décimer les mesures de spectrométrie afin d'obtenir lesdites différentes résolutions, ledit module pouvant également être configuré, dans une configuration usuelle de l'invention, pour effectuer une normalisation et une éventuelle réduction de bruit desdites mesures de spectrométrie,
- des modules de détermination de pics d'intérêt 22A, 22B, 22C, chaque module de détermination de pics d'intérêt 22A, 22B, 22C étant configuré pour déterminer les pics d'intérêt et des plages de longueurs d'onde d'intérêt, chacune associée à chaque pic d'intérêt respectif d'un spectre à une résolution respective fournie par le module de modification de résolution 21,
- des modules de calcul de valeurs caractéristiques 23A, 23B, 23C configurés pour calculer des valeurs caractéristiques de référence d'un spectre, chaque module de calcul de valeurs caractéristiques 23A, 23B, 23C étant configuré pour déterminer les valeurs caractéristiques de référence d'un spectre à une résolution respective fournie par le module de modification de résolution 21,

- des modules d'extraction de points caractéristiques 24A, 24B, 24C, chaque module d'extraction de points caractéristiques 24A, 24B, 24C étant configuré pour extraire les points caractéristiques de référence d'un spectre à une résolution respective à partir des pics d'intérêts et des plages de longueurs d'onde d'intérêt fournies par le module de détermination de pics d'intérêt 22A, 22B, 22C correspondant et des valeurs caractéristiques fournies par le module de calcul de valeurs caractéristiques 23A, 23B, 23C correspondant,
- un module de calcul 25 adapté, dans cette première configuration, soit pour mémoriser les points caractéristiques de référence extraits par chacun des modules d'extraction de points caractéristiques 24A, 24B, 24C afin de permettre un calcul de corrélation avec les points caractéristiques de mesure, soit pour enregistrer dans l'unité de stockage les points caractéristiques de référence extraits.

On notera, bien entendu que, si dans l'exemple illustré sur la figure 2, l'unité de traitement 20 est configurée pour permettre le traitement en parallèle d'un premier à un troisième spectre de référence pour un composé de référence donné, le premier au troisième spectre de référence se distinguant de par leur résolution, d'autre configuration de l'unité de traitement sont parfaitement envisageable sans que l'on sorte du cadre de l'invention.

Ainsi, par exemple, l'unité de traitement 20 peut être adaptée pour permettre le traitement d'un unique premier spectre de référence à une seule résolution par composé de référence. Selon cette possibilité, l'unité de traitement n'a pas forcément nécessité d'un module de modification de résolution 21, et l'unité de traitement comportant un unique module de détermination de pics d'intérêt 22A, un unique module d'extraction de points caractéristiques 24A et un unique module d'extraction de points caractéristiques 24A.

De la même manière, l'unité de traitement 20 peut également être adaptée pour traiter un nombre de spectre de référence par composé de référence différent de trois sans que l'on sorte du cadre de l'invention, le nombre de modules de détermination de pics d'intérêt 22A, 22B, 22C, de modules de calcul de valeurs caractéristiques 23A, 23B, 23C, et de modules d'extraction de points caractéristiques 24A, 24B, 24C étant alors adapté aux nombre de spectre de référence.

Chacun des modules de détermination de pics d'intérêt 22A, 22B, 22C peut être configuré pour permettre une détection de pic d'intérêt selon ses procédés de détection connus de l'art antérieur, tel que par exemple par l'utilisation de la fonction « Searchpeaks » fournie par Matlab[T] ou d'une fonction équivalente. En variante, comme cela est décrit plus avant dans le cadre du deuxième mode de réalisation de l'invention, chaque module de détermination de pics d'intérêt 22A, 22B, 22C peut déterminer la présence d'un pic d'intérêt au moyen d'une fonction dérivée. Le module de détermination permet ainsi de déterminé le ou chaque pic d'intérêt et la longueur d'onde d'intérêt correspondant audit pic d'intérêt.

A partir de chacun des pics d'intérêt détectés, le module de détermination permet de définir une plage de longueurs d'onde d'intérêt correspondant comportant ledit pic d'intérêt. En fonction de différentes possibilités de l'invention, chaque plage de longueurs d'onde d'intérêt peut être définie, par exemple, comme suit :

- une plage comprenant un nombre de points prédéterminé avant et après la longueur d'onde du pic d'intérêt, ce nombre de points pouvant être identique pour chacune des résolutions, selon cette possibilité, les nombres de points avant et après peuvent être identiques ou différents,
- une plage de longueurs d'onde d'intérêt avant et après le pic d'intérêt, le nombre de points variant alors en fonction de la résolution du spectre,
- une plage de longueurs d'onde d'intérêt variant en fonction de la longueur d'onde du pic d'intérêt, ceci afin de prendre en compte, par exemple, la résolution du spectromètre,
- une plage de longueurs d'onde d'intérêt prenant en compte une largeur à mi-hauteur estimée ou calculé du pic d'intérêt.

Les modules de calcul de valeurs caractéristiques 23A, 23B, 23C sont chacun configurés pour appliquer une fonction de calcul caractéristique au spectre de référence à la résolution correspondante. Une telle fonction peut être, par exemple, une fonction dérivée. Une telle fonction dérivée, comme cela est explicité plus avant dans le cadre du deuxième mode de réalisation, permet de faciliter la recherche des pics d'intérêt. Bien entendu, cette fonction de calcul caractéristique peut être autre, comme par exemple, la suppression d'un spectre représentatif du bruit ou encore une fonction carrée afin d'exacerber les pics d'intérêt présents.

Une fois les pics d'intérêt, les plages de longueurs d'onde d'intérêt et les valeurs caractéristiques déterminés pour chacun des spectres de référence à chaque résolution, chaque module d'extraction de points caractéristiques 24A, 24B, 24C est configuré pour extraire les valeurs de caractéristiques correspondant à chacune des plages de longueurs d'onde d'intérêt afin de définir les points caractéristique de référence.

Les points caractéristiques ainsi déterminés pour les spectres de référence à chaque résolution et pour chaque pic d'intérêt, le module de calcul 25 permet leur enregistrement soit dans une mémoire du module de calcul 25 pour permettre ultérieurement des calculs de corrélation avec des points caractéristiques de mesure obtenus à partir de de la même fonction de calcul caractéristique appliquée à la mesure de spectroscopie de la composition, soit dans l'unité de stockage pour une utilisation ultérieure dans le cadre d'une détection de la présence d'au moins un composé dans une composition à identifier.

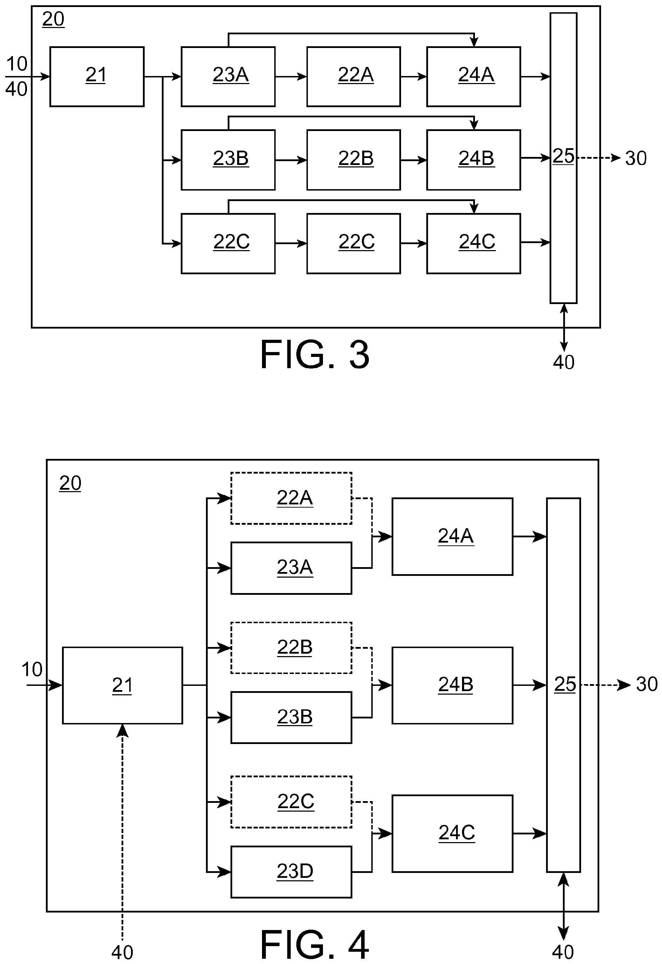

Bien entendu, une telle unité de traitement 20 selon ce premier mode de réalisation de l'invention et cette figure 2 n'illustre qu'un exemple de réalisation de l'invention et est nullement limitatif. Ainsi, la figure 3 illustre une unité de traitement 20 selon un deuxième mode de réalisation de l'invention qui se distingue en ce que l'unité de traitement 20 comporte des modules de détermination de pics d'intérêt 22A, 22B, 22C utilisant les valeurs caractéristiques calculées par le module de calcul de valeurs caractéristiques 23A, 23B, 23C.

Ainsi, avec une telle unité de traitement 20, chaque module de détermination de pics d'intérêt 22A, 22B, 22C est configuré pour déterminer les pics d'intérêt et les plages de longueurs d'onde d'intérêt qui leur sont associées à partir des valeurs caractéristiques déterminées par le module de détermination de pics d'intérêt 22A, 22B, 22C au moyen du spectre de référence présentant la résolution correspondante.

Bien entendu, de la même façon qu'une unité de traitement 20 selon le premier mode de réalisation, une fois les pics d'intérêt, les plages de longueurs d'onde d'intérêt et les valeurs caractéristiques déterminées pour chacun des spectres de référence à chaque résolution, chaque module d'extraction de points caractéristiques 24A, 24B, 24C est configuré pour extraire les valeurs de caractéristiques correspondant à chacune des plages de longueurs d'onde d'intérêt afin de définir les points caractéristiques de référence.

Les points caractéristiques ainsi extraits sont ensuite traités par l'unité de calcul 25 d'une manière identique à celle de l'unité de traitement 20 selon le premier mode de réalisation.

On peut noter que, quelle que soit l'unité de traitement 20, celle-ci pouvant être aussi bien selon le premier mode de réalisation que selon le deuxième mode de réalisation, les mesures de spectroscopie des composés de référence peuvent être :

- des mesures réalisées en usine, ceci de préférence avec le spectromètre du système de détection 1, mais un autre spectromètre du même type travaillant à des longueurs d'onde similaires peut être utilisé,
- des mesures préalables réalisées par un utilisateur du système de détection 1 mais un autre spectromètre du même type travaillant à des longueurs d'onde similaires peut être utilisé,

- des mesures d'étalonnage à réaliser par l'utilisateur avant chaque utilisation du système de détection,
- toute donnée fournie au système à fin de définir une référence,
- une combinaison de deux ou plus de ces quatre possibilités.

On peut ainsi envisager, par exemple un système de détection 1 étalonné en usine, l'utilisateur ayant la possibilité d'ajouter des composés de référence supplémentaires en effectuant une mesure desdits composés de référence supplémentaires.

La figure 3 illustre un schéma fonctionnel d'une unité de traitement 20 selon un deuxième mode de réalisation de l'invention dans laquelle les modules de détermination de pics d'intérêt sont configurés pour déterminer les pics d'intérêt à partir des valeurs caractéristiques fournies par le module de calcul de valeurs caractéristiques 23A, 23B, 23C correspondant.

Une unité de traitement selon ce deuxième mode de réalisation se différencie d'une unité de traitement selon le premier mode de réalisation de l'invention en ce que les modules de détermination de pics d'intérêt sont configurés pour déterminer les pics d'intérêt à partir des valeurs caractéristiques fournies par le module de calcul de valeurs caractéristiques 23A, 23B, 23C correspondant.

Ainsi, dans ce deuxième mode de réalisation, le module de modification de résolution 21 fournit les spectres de références présentant lesdites différentes résolutions aux seuls modules de calcul de valeurs caractéristiques 23A, 23B, 23C. Les modules de calcul de valeurs caractéristiques 23A, 23B, 23C fournissent, quant à eux, les valeurs caractéristiques calculées à partir des spectres de référence aux modules de détermination de pics d'intérêt 22A, 22B, 22C et aux modules de calcul de valeurs caractéristiques 23A, 23B, 23C. Une unité de traitement 20 selon ce deuxième mode de réalisation peut ainsi bénéficier de la fonction de calcul caractéristique, notamment lorsque cette dernière est une fonction dérivée, afin de faciliter la détermination des pics d'intérêt par les modules de détermination de pics d'intérêt 22A, 22B, 22C.

Les modules d'extraction de points caractéristiques 24A, 24B, 24C et le module de calcul 25 d'une unité de traitement 20 selon ce deuxième mode de réalisation de l'invention sont identiques à eux de l'unité de traitement 20 selon le premier mode de réalisation.

Bien entendu, si les unités de traitement 20 selon le premier et le deuxième mode de réalisation fournissent deux exemples de réalisation de l'invention, elles ne sont nullement limitatives de l'invention. Ainsi, il est parfaitement envisageable, sans que l'on sorte du cadre de l'invention que :

- l'unité de traitement soit dépourvue de module de modification de résolution 21, l'unité de traitement comprenant alors un seul exemplaire de chacun des modules de détermination de pics d'intérêt 22A, 22B, 22C, des modules de calcul de valeurs caractéristiques 23A, 23B, 23C et des modules d'extraction de points caractéristiques 24A, 24B, 24C, et le module de détermination de pics d'intérêt étant alors apte à recevoir les mesures de spectroscopie fourni par le spectromètre 10,
- le module de modification de résolution 21 soit configuré uniquement pour fournir une modification de résolution à une seule résolution prédéterminée, l'unité de traitement comprenant alors un seul exemplaire de chacun des modules de détermination de pics d'intérêt 22A, 22B, 22C, des modules de calcul de valeurs caractéristiques 23A, 23B, 23C et des modules d'extraction de points caractéristiques 24A, 24B, 24C,
- l'unité de traitement 20 peut être adaptée pour effectuer un traitement séquentiel des spectres de référence aux différentes résolutions ceci afin de limiter le nombre de modules nécessaires. Selon cette possibilité, l'unité de traitement 20 comporte un unique module de détermination de pics d'intérêt 22A, un unique calcul de valeurs caractéristiques 23A, et un unique module d'extraction de points caractéristiques 24A, ceux-ci étant configuré pour les différentes résolutions de spectres. Dans ce cas on utilisera un séquenceur pour dérouler la séquence.
- l'unité de stockage 40 stocke les points caractéristiques de référence des composés de référence, ces points caractéristiques de référence, et donc les pics d'intérêt et les plages de longueurs d'onde d'intérêt correspondants, ayant étaient déterminés, par exemple, en usine lors de la fabrication du système de détection 1, l'unité de traitement 20 n'ayant plus à déterminer les pics d'intérêt et les plages de longueurs d'onde d'intérêt, est alors dépourvue de module de détermination de pics d'intérêt 22A, 22B, 22C,
- les points caractéristiques de référence peuvent être les valeurs du spectre à la résolution correspondante, le module de traitement 20 étant alors dépourvu de module de calcul de valeurs caractéristiques 23A, 23B, 23C.

Une fois les points caractéristiques de référence déterminés, que ce soit en usine ou préalablement à la mesure de la composition à identifier, l'unité de traitement 20 présente une deuxième configuration dite de mesure. Dans cette deuxième configuration, l'unité de traitement 20 est apte à utiliser les points caractéristiques de référence déterminés afin de déterminer si la composition à identifier comporte un ou plusieurs des composés de référence.

Dans la deuxième configuration, comme illustré sur la figure 4 pour une unité de traitement conforme au premier mode de réalisation, les modules de détermination de pics d'intérêt 22A, 22B, 22C ne sont pas utilisés. Ainsi, dans cette deuxième configuration, les modules de l'unité de traitement 20 présentent l'agencement suivant :

- le module de modification de résolution 21 est configuré pour fournir des spectres de mesure à différentes résolutions (les mêmes que celles utilisées pour générer les points caractéristiques) à partir de mesures de la composition à identifier, lesdites mesures ayant été obtenues par une mesure de spectroscopie réalisée au moyen du spectromètre 10, le module de modification 21 étant adapté pour interpoler et/ou décimer les mesures de spectrométrie afin d'obtenir lesdites différentes résolutions, ledit module pouvant également être configuré, dans une configuration usuelle de l'invention, pour effectuer une normalisation et une éventuelle réduction de bruit desdites mesures de spectrométrie,

- les modules de calcul de valeurs caractéristiques 23A, 23B, 23C sont configurés pour calculer des valeurs caractéristiques d'un spectre de mesure, chaque module de calcul de valeurs caractéristiques 23A, 23B, 23C étant configuré pour déterminer les valeurs caractéristiques d'un spectre de mesure à une résolution respective fournie par le module de modification de résolution 21,

- des modules d'extraction de points caractéristiques 24A, 24B, 24C, chaque module d'extraction de points caractéristiques 24A, 24B, 24C étant configuré pour extraire les points caractéristiques de mesure d'un spectre à une résolution respective à partir des pics d'intérêts et des plages de longueurs d'onde d'intérêt pour un composé de référence et des valeurs caractéristiques fournies par le module de calcul de valeurs caractéristiques 23A, 23B, 23C pour la composition à identifier,

- un module de calcul 25 configuré, dans cette deuxième configuration, pour chaque composé de référence et le ou chaque pic d'intérêt identifié pour ledit composé, réaliser un calcul de corrélation entre les premiers points caractéristiques de référence dudit composé, récupéré soit dans une mémoire interne dudit module soit dans l'unité de stockage 40, et les premiers points caractéristiques de mesure et déterminer d'une première valeur de corrélation de la composition pour ledit composé et ledit pic d'intérêt, le module de calcul étant également configuré pour détecter la présence ou non de chacun des composés de référence à partir de la première valeur de corrélation.

Le module de calcul 25 est en outre configuré pour fournir le résultat de la détection à l'unité de signalisation afin d'en informer l'utilisateur.

Bien entendu, une unité de traitement 20 conforme au deuxième mode de réalisation présente une deuxième configuration similaire à celle décrite ci-dessus en lien avec l'un quelconque.

Ainsi, dans cette deuxième configuration, le module de modification de résolution 21, les modules d'extraction de points caractéristiques 23A, 23B, 23C et les modules d'extraction de points caractéristiques 24A, 24B, 24C présentent une configuration similaire à celle de la première configuration.

Le module de calcul 25 est configuré pour effectuer un calcul de corrélation à partir des points caractéristiques de mesure et des points caractéristiques de référence. Plus précisément, un calcul de corrélation est réalisé entre la composition et chaque composé de référence en calculant, une valeur de corrélation respective pour chaque pic d'intérêt de chaque spectre de référence dudit composé entre les points caractéristiques de mesure et les points caractéristiques de référence.

Ce calcul de corrélation peut consister à mettre en œuvre l'équation suivante :

$$(1) \qquad \rho\left(X'_{a,b}, Y'_{a,b}\right) = \frac{\sum_{i=1}^{N}(\overline{X'}_{a,b} - x'_{a,b}i)(\overline{Y'}_{a,b} - y'_{a,b}i)}{\sigma_{X'_{a,b}}\sigma_{Y'_{a,b}}}$$

Avec $\rho$ la valeur de corrélation entre les points caractéristiques de mesure du composé $X'_{a,b}$ et les points caractéristiques de référence $Y'_{a,b}$, a représentant un pic d'intérêt donné d'un spectre de référence b du composé de référence, $x'_{a,b}i$ et $y'_{a,b}i$ étant un point caractéristique i de respectivement les points caractéristiques de mesure $X'_{a,b}$ et les points caractéristiques de référence $Y'_{a,b}$.

Ainsi pour un composé de référence donné, le module de calcul un nombre $\sum_{j=1}^{M} P_j$ de valeur de corrélation, P étant le nombre de pic d'intérêt pour le $j^{ième}$ spectre de référence, M étant le nombre de spectres de références, c'est-à-dire le nombre de résolutions différentes générées par le module de modification de résolution 21. Ces valeurs de corrélation forment un vecteur de corrélation à $\sum_{j=1}^{M} P_j$ dimensions.

Le module de calcul 25 est configuré pour détecter à partir des valeurs de corrélation calculées la présence d'au moins un composé de référence dans la composition. Selon une possibilité préférentielle de l'invention, cette détection est réalisée au par classification de valeurs de corrélation de test préalablement établies dans le cadre d'un étalonnage ou apprentissage du système de détection 1.

Pour permettre un tel étalonnage, l'unité de traitement 20 peut présenter une troisième configuration dans laquelle l'unité de traitement est apte à utiliser les points caractéristiques de référence déterminés pour chaque composé de référence dans la première configuration afin de fournir des valeurs de corrélation de compositions test connues, avec pour le ou chaque composé de référence, une première part desdites compositions de test à différente concentration et incluant différents éléments interférants ou non comprenant ledit composé, une deuxième part desdites compositions de test étant dépourvues dudit composé. Les composés d'étalonnage peuvent soit être directement mesurés soit par l'utilisation de spectres d'étalonnage qui sont formés de combinaisons linéaire de spectres réels. Cette dernière approche permet d'utiliser un très grand nombre de spectres et d'interférant. La calibration peut être avantageusement renforcée pour les faibles concentrations du ou des composés de référence.

Selon cette possibilité de l'invention, l'unité de traitement 20 dans la troisième configuration se différencie de l'unité de traitement dans la deuxième configuration en ce que :

- le module de modification de résolution 21 et les modules de calcul de valeurs caractéristiques 23A, 23B, 23C sont aptes à traiter des mesures de spectroscopie des compositions de test et a ainsi fournir des points caractéristiques de test à partir desdites mesures de spectroscopie des compositions de test, lesdites mesures de spectroscopie étant soit réalisées préalablement en usine et fournis par l'unité de stockage 40, soit réalisées préalablement à la mesure de spectrométrie de la composition à identifier,
- le module de calcul 25 est adapté pour calculer pour chaque pic d'intérêt, chaque composé de référence et chaque composition de test, une valeur de corrélation de test entre les points caractéristique de test de ladite composition de test et les points caractéristiques de référence pour ledit pic d'intérêt et le composé de référence, et pour enregistrer les valeurs de corrélation de test dans une mémoire interne du module de calcul 25 ou dans l'unité de stockage.

Pour se faire, le module de calcul 25 est adapté pour faire un calcul des valeurs de corrélation pour les compositions de test similaire à celui pour la composition à identifier. Ainsi ce calcul de valeur de corrélation, de la manière que pour la composition à identifier, peut se faire selon l'équation (1).

Ainsi dans cette troisième configuration, le module de calcul 25 va permettre de calculer pour chaque couple de composition test et de composé de référence un nombre $\sum_{j=1}^{M} P_j$ de valeur de corrélation. Il est donc possible de déterminer pour chaque couple de composition test et de composé de référence un vecteur de corrélation à $\sum_{j=1}^{M} P_j$ dimensions.

Selon cette possibilité d'étalonnage du système de détection, la détection de la présence ou non d'un composé de référence dans la composition à identifier par l'unité de calcul peut être réalisée au moyen d'un classifieur. Un tel classifieur peut pour chaque composé de référence, ceci sur la base des vecteurs de corrélation des compositions de test pour ledit composé de référence, classer le vecteur de corrélation de la composition à identifier et ainsi déterminer si le vecteur de corrélation correspondant correspond à une composition comportant ledit composé de référence ou à une composition dépourvue dudit composé.

Dans une application préférentielle de l'invention, le classifieur est un classifieur du type machine à vecteurs de support, plus connu sous la dénomination anglaise « Support Vecteur Machine ». Un tel classifieur détermine, à partir des différents vecteurs de corrélation de test, un hyperplan de séparation dans l'espace à $\sum_{j=1}^{M} P_j$ dimensions dans lequel se projettent les vecteurs de corrélation. Ainsi, de par la position du vecteur de corrélation de la composition à identifier pour un composé de référence donné et de sa distance vis-à-vis de l'hyperplan de séparation, l'unité de calcul peut déterminer la présence d'un composé de référence et estimer un coefficient de confiance (celui-ci étant élevé pour une distance vecteur de corrélation hyperplan importante).

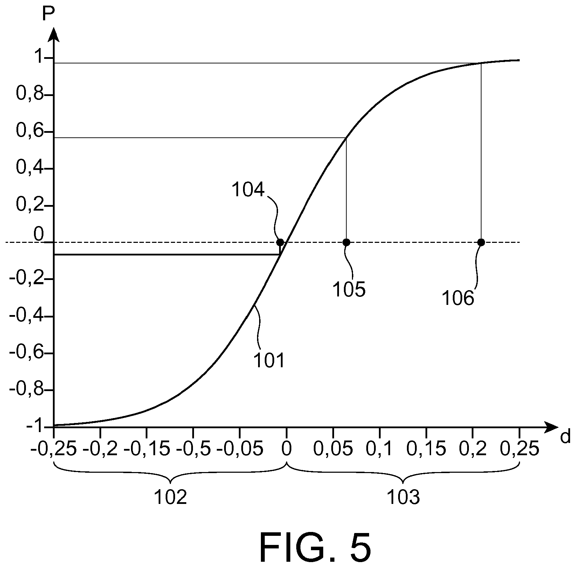

Ce principe est illustré graphiquement sur la figure 5 qui illustre la variation de la confiance ou probabilité 101 de présence P du composé de référence en fonction de la distance d (en unité arbitraire). Dans le cas de la figure 5, l'indice de confiance est obtenu par projection de la distance d sur une fonction sigmoïde. On peut ainsi voir que pour une distance négative vis-à-vis de l'hyperplan, tel que c'est le cas pour le point 104 qui est présent dans la zone négative 102, la composition n'est pas détectée comme comportant le composé ceci avec une confiance relativement faible, puisqu'on trouve une confiance inférieur à 5%. Par contre pour les points 105 et 106 sur la figure 5, qui se trouvent dans la zone positive 103, la distance étant positive et relativement importante. On peut donc affirmer que les compositions correspondant aux points 105 et 106 comportent le composé de référence, ceux-ci étant présents dans la zone positive, avec une confiance relative importante, celle-ci étant respectivement supérieure à 60% et 98% pour les points 105 et 106.

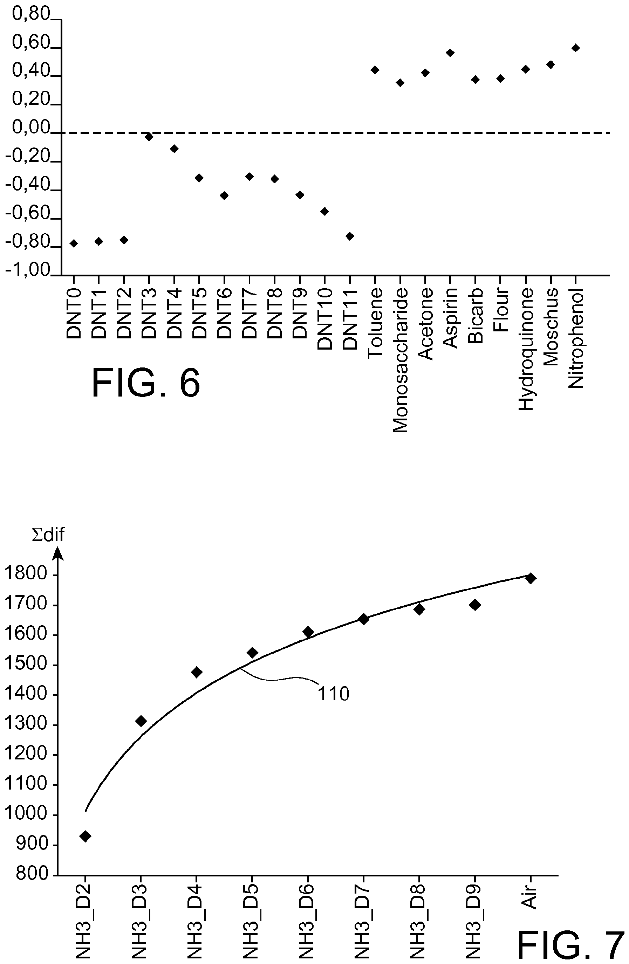

La figure 6 illustre graphiquement un exemple de mise en œuvre d'un tel principe pour la détection de du 2,4-dinitrotoluène, plus connu sous le sigle DNT. Dans cet exemple, plusieurs compositions, dont une première partie comprend du DNT et une deuxième partie n'en comprend pas, ont été soumises au procédé selon l'invention pour déterminé la présence ou non de DNT. La figure 6 illustre le résultat avec en abscisse les différentes compositions et en ordonnée la distance vis-à-vis de l'hyperplan obtenue pour une composition donnée. Les compositions étudiées sont les suivantes :

- DNT0 : une composition de DNT pure,
- DNT1 : une composition comprenant 71%mass de DNT et 29%mass de farine,
- DNT2 : une composition comprenant 66%mass de DNT et 34%mass de bicarbonate de sodium,
- DNT3 : une composition comportant 2%mas de DNT et 98%mass de toluène,
- DNT4 : une composition comportant 4%mas de DNT et 96%mass de toluène,
- DNT5 : une composition comportant 17%mas de DNT et 83%mass de toluène,
- DNT6 : une composition comportant 31%mas de DNT et 69%mass de toluène,
- DNT7 : une composition comportant 2%mass de DNT et 98%mass de sucre,
- DNT8 : une composition comportant 5%mass de DNT et 95%mass de sucre,
- DNT9: une composition comportant 10%mass de DNT et 95%mass de sucre,
- DNT10: une composition comportant 22%mass de DNT et 78%mass de sucre,
- DNT11: une composition comportant 53%mass de DNT et 47%mass de sucre,
- Toluene : une composition de toluène pur,
- Monosaccharide : une composition de sucre pur,
- Acetone : une composition d'acétone pur,
- Aspirin : une composition d'acide acétylsalicylique pur,
- Bicarb : une composition de bicarbonate de sodium pur,
- Flour : une composition de farine pure,
- Hydroquinone : une composition d'hydroquinone pur, plus connu sur la dénomination benzène-1,4-diol,
- Moschus : une composition de musc pur,
- Nitrophenol : une composition de nitrophénols pur.

On peut voir sur ce graphique que la première partie des compositions comportant du DNT, à savoir les compositions DNT0 à DNT11, présentent toutes une distance à l'hyperplan négative alors que la deuxième partie, celles dénuées de DNT, présentes une distance positive. Cela est observé même pour les compositions présentant une concentration en DNT de 2%mass. Ainsi, avec le procédé selon l'invention, il est envisageable de détecter une quantité relativement faible de composé même en présence d'élément interférant tel que le toluène ou le sucre.

Selon une possibilité de l'invention, l'unité de traitement 20 peut également permettre d'estimer la concentration relative en composé de référence de la composition après identification dudit composé de référence.

Plus précisément, cette détermination de la concentration par l'unité de traitement 20 peut être réalisée par la mise en œuvre par l'unité de calcul 25 des étapes suivantes :

- pour au moins l'un des spectres de référence et le spectre de mesure correspondant, calcul d'une somme de différences entre les valeurs dudit spectre de référence et les valeurs dudit spectre de mesure pour la ou l'ensemble des plages de longueurs d'onde d'intérêt dudit composé,
- estimation de la concentration du composé dans la composition à identifier à partir de la somme de différences entre les valeurs du premier spectre de référence et celles du premier spectre de mesure.

En effet, comme le montre graphiquement la figure 7, cette somme 110, $\Sigma$ dif, est inversement proportionnelle à la concentration en composé dans la composition. Il s'agit là d'une application de la loi de Beer-Lambert. Ainsi, la figure 7 montre la variation de cette somme de différences pour des compositions, ici des mélanges gazeux, dont la concentration en un composé, ici de l'ammoniac $NH3$ est diminuée de la composition NH3_D2, comprenant 100%mass d'ammoniac à la composition Air qui est dénuée d'ammoniac $NH3$. On notera que la loi de composition des compositions NH3_D2 à NH3_D9 présentent une concentration massique en ammoniac qui est divisée par deux entre la composition NH3_DN de rend N et la composition NH3_DN-1 de rang N-1. Ainsi, la composition NH3_D2 comporte de l'ammoniac pure, la composition NH3_D3 comporte 50%mass d'ammoniac et 50%mass d'air et la composition NH3_D4 comporte 25%mass d'ammoniac et 75%mass d'air.

On peut voir sur la figure 3 que la somme de différences est maximale pour la composition ne comportant que de l'air est minimum pour la composition NH3_D2. Ainsi, avec un simple étalonnage, notamment réalisable à partir des compositions de test, l'unité de traitement 20 est apte à fournir une estimation de la concentration dans la composition à identifier de chaque composé détecté dans ladite composition.

Le module de calcul 25 est également adapté pour, une fois déterminé la présence ou non d'au moins un des composés, transmettre le résultat de ladite détection à l'unité de signalisation afin d'informer l'utilisateur dudit résultat.

L'unité de signalisation 30 est configurée pour fournir une information à l'utilisateur dudit résultat, cette information étant signalée à l'utilisateur sous au moins une forme sélectionnée parmi une forme visuelle, une forme sonore ou par encore sous une forme d'actionnement. Ainsi l'unité de signalisation peut comporter par exemple au moins l'un parmi :

- un écran d'affichage configuré pour afficher le résultat de la détection et de l'éventuelle concentration estimée du composé dans ladite composition à identifier,
- un système d'alarme visuelle, tel que des lumières configurées pour s'allumer en cas de détection d'au moins un desdits composés de référence,
- un système d'alarme sonore, tel qu'au moins un haut-parleur configuré pour émettre une alarme sonore en cas de détection d'au moins un desdits composés de référence,
- un système de fermeture adapté pour fermer une porte ou un sas en cas de détection de la présence d'au moins un desdits composés,
- un système d'ouverture d'un circuit de ventilation en cas de détection de la présence d'au moins un desdits composés,
- un système de transmission de l'information à un centre opérationnel de contrôle.

Dans une configuration usuelle de l'invention, l'unité de signalisation 30 comporte notamment un écran affichant le résultat de détection de composé de l'unité de traitement qui est généralement complété avec l'une quelconques des possibilités mentionnées ci-dessous, telle qu'un système d'alarme sonore.

En fonction de l'unité de traitement 20 et de son éventuelle mémoire interne, l'unité de stockage 40 est configurée pour stocker des données relatives aux composés de référence et des éventuelles compositions de test sélectionnées dans le groupe comportant :

- pour chaque composé de référence, au moins un spectre de référence d'au moins un échantillon de référence comportant ledit composé de référence,
- pour chaque composé, des points caractéristiques de référence, les informations concernant au moins un premier pic d'intérêt identifié au moyen d'au moins un spectre de référence d'au moins un échantillon de référence comportant ledit composé de référence,
- pour chaque composé, des points caractéristiques de référence, des premiers points caractéristiques de référence et les plages de longueurs d'onde d'intérêt correspondant à au moins un premier pic d'intérêt d'au moins un spectre de référence d'au moins un échantillon de référence comportant ledit composé de référence,
- des spectres de test respectif des compositions de test,
- pour chaque composition de test et chaque composé de référence, des points caractéristiques de test obtenus au moyen d'au moins un spectre de test de ladite composition pour les plages de longueurs d'onde d'intérêt de ladite composition,
- pour chaque composition de test et chaque composé de référence, les valeurs de cohérence calculées à partir d'au moyen d'au moins un spectre de test de ladite composition et des points caractéristiques dudit composé de référence.

On notera que chacune de l'unité de traitement 20, de l'unité de signalisation 30 et de l'unité de stockage peut être fournie soit par une électronique indépendante, soit par une sous-partie d'une électronique commune à au moins une autre desdites unités, soit un programme ou un sous-programme informatique exécuté sur un ordinateur local ou distant, ou un système hybride de ces possibilités.

Le système d'identification 1 selon ces deux modes de réalisation permet la mise en œuvre d'un procédé de détection de la présence d'au moins un composé de référence dans une composition à identifier comprenant les étapes suivantes :

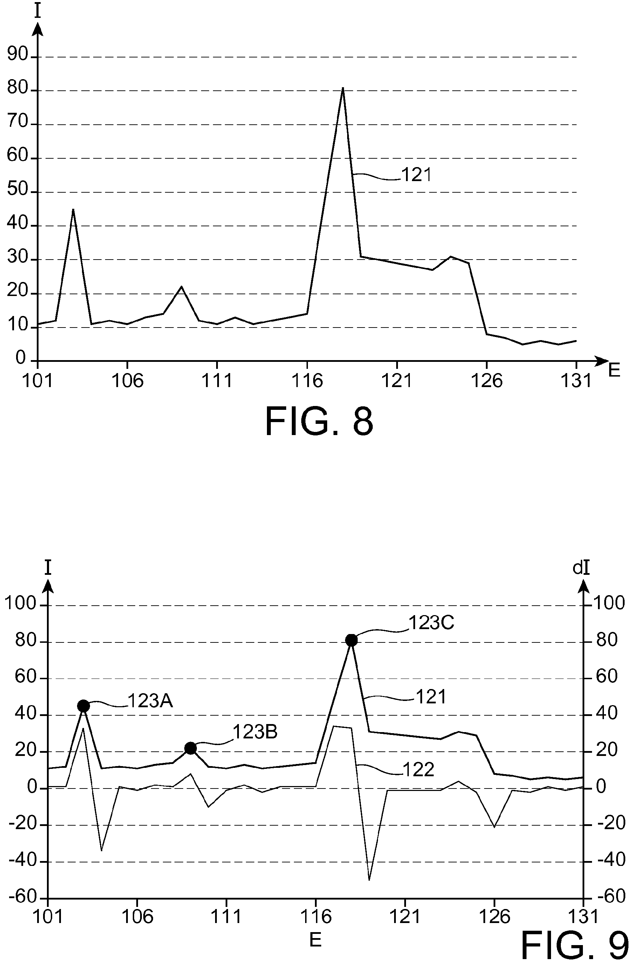

- réalisation d'au moins une mesure de spectrométrie d'au moins un échantillon de référence respectif pour chaque composé de référence, et fourniture à partir de ladite mesure de spectrométrie d'une pluralité de spectres de référence présentant chacun une résolution respective, tel que le spectre 121 illustré sur la figure 8,
- pour chaque composé et chaque spectre de référence correspondant audit composé, calcul de valeurs caractéristiques dudit spectre de référence à partir d'une fonction de calcul caractéristique, un tel calcul étant illustré sur la figure 9 qui montre un tel calcul sous la forme d'une dérivée 122 du spectre 121,

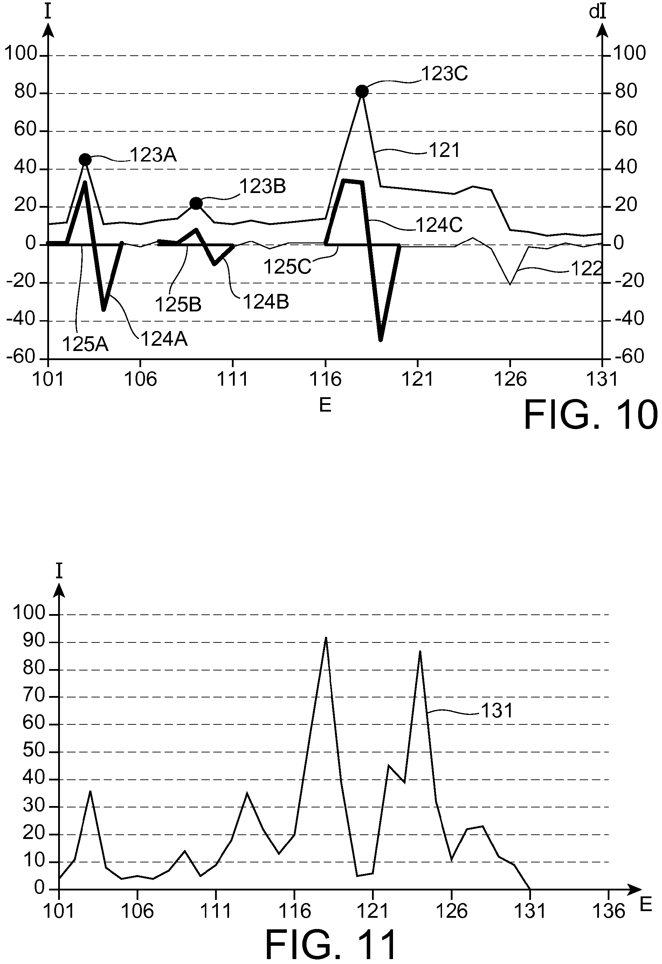

- identification, pour chaque composé de référence et chacun des spectres de référence correspondant audit composé de référence, d'au moins un premier pic d'intérêt à partir dudit spectre de référence, la figure 9 montrant un premier, un deuxième et un troisième pic d'intérêt 123A, 123B, 123C identifiés pour le spectre 121,
- extraction, pour chaque composé de référence, chaque spectre de référence et le ou chaque premier pic d'intérêt identifié pour ledit composé de référence et ledit spectre de référence, de premiers points caractéristiques de référence dudit spectre de référence dans une plage de longueurs d'onde d'intérêt correspondant audit au moins un premier pic d'intérêt, les points caractéristiques de référence dudit spectre de référence correspondant aux valeurs caractéristiques calculées pour ladite plage de longueurs d'onde d'intérêt, une telle extraction étant montrée sur la figure 10 avec des premiers, des deuxièmes et des troisièmes points caractéristiques 124A, 124B, 124C extraits pour respectivement le premier, le deuxième et le troisième pic de d'intérêt, ceci dans une première, une deuxième et une troisième plage de longueurs d'onde d'intérêt 125A, 125B, 125C,

- réalisation d'une mesure de spectrométrie de la composition à identifier et fourniture d'une pluralité de spectres de mesure présentant chacun une résolution respective correspondant à une résolution d'un spectre de référence de chacun des composés de référence, un tel spectre 131 étant illustré sur la figure 11,

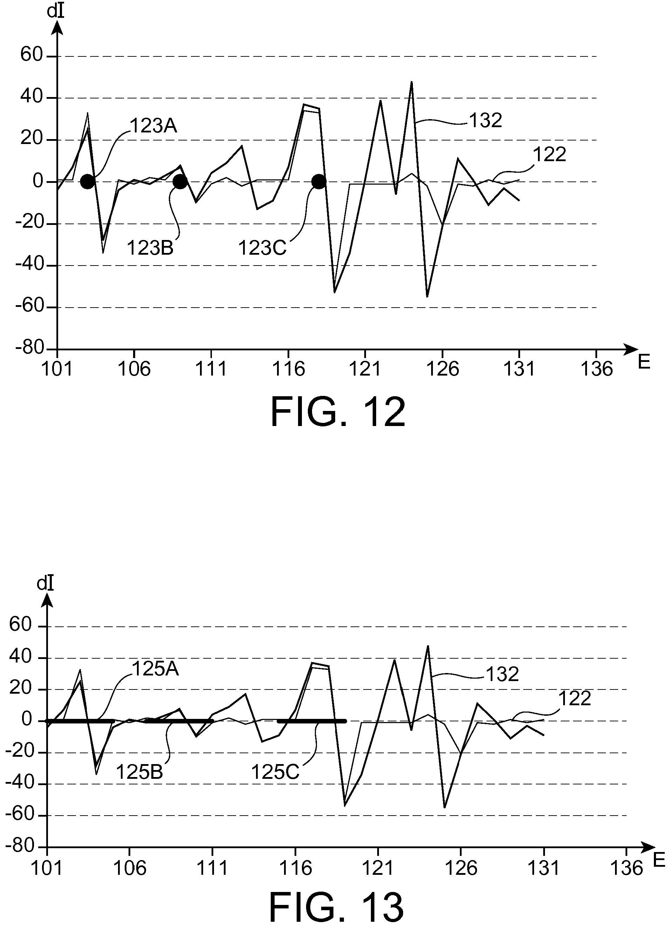

- pour chaque spectre de mesure, calcul de valeurs caractéristiques dudit spectre de mesure à partir de la fonction de calcul caractéristique, un tel calcul étant illustré sur la figure 9 qui montre un tel calcul sous la forme d'une dérivée 122 du spectre 121, un tel calcul étant illustré sur la figure 12 qui montre un tel calcul sous la forme d'une dérivée 132 du spectre de mesure 122 ceci en parallèle du résultat 132 obtenu pour le spectre de référence,

- pour chaque composé de référence, pour chaque spectre de référence et pour le ou chaque premier pic d'intérêt identifié pour ledit composé, extraction de premier points caractéristiques de mesure du spectre de mesure présentant la résolution correspondante dans la plage de longueurs d'onde d'intérêt comprenant ledit au moins un premier pic d'intérêt, les plages d'énergies d'intérêt 125A, 125B, 125C sont montrées en relation avec les valeurs caractéristiques 132, 122 du spectre de référence et du spectre de mesure sur la figure 13,

- pour le ou chaque composé de référence et le ou chaque pic d'intérêt identifié, réalisation d'un calcul de corrélation entre les premiers points caractéristiques de référence et les premiers points caractéristiques de mesure et détermination d'une première valeur de corrélation de la composition pour ledit composé de référence et ledit pic d'intérêt,

- détection de la présence ou non du composé dans la composition à identifier à partir de l'au moins une première valeur de corrélation obtenue pour l'au moins un composé de référence et de l'au moins un premier pic d'intérêt identifié pour ledit composé de référence.

On notera que dans une configuration usuelle de l'invention, les étapes ci-dessus se succèdent dans l'ordre ci-dessus.

Ainsi, on peut voir sur la figure 13 que, malgré la différence significative entre le spectre de mesure 131 et le spectre de référence 121, la différence des valeurs caractéristiques 122, 132 au niveau des plages de longueurs d'onde d'intérêt est faible démontrant ainsi une corrélation entre les points caractéristiques de référence et de mesure.

Comme décrit en relation avec l'unité de traitement 20, l'étape de détection de la présence ou non du composé est réalisée à partir de machine à vecteurs de support. Notamment dans le cadre de cette possibilité, le procédé de détection peut comporter une étape d'étalonnage préalable à l'étape de réalisation d'une mesure de spectrométrie de la composition. L'étape préalable d'étalonnage peut comprendre les sous-étapes suivantes :

- réalisation de mesures de spectroscopie d'une pluralité de compositions de tests connues et fourniture d'un spectre de test respectif de chacune des compositions de test pour chaque résolution des spectres de référence, les compositions de test étant choisies de manière que, pour chaque composé de référence, une première part desdites compositions de test comprend ledit composé, une deuxième part desdites compositions de test est dépourvue dudit composé, et

- pour chaque composé de référence et chaque spectre de référence, pour le ou chaque premier pic d'intérêt identifié pour ledit composé de référence, ledit spectre de référence, et pour chaque composition de test, extraction de premiers points caractéristiques de test du au moins un premier spectre de test correspondant à la composition de test dans la plage de longueurs d'onde d'intérêt comprenant ledit au moins un premier pic d'intérêt,

- pour chaque composé de référence, chaque spectre de référence, le ou chaque pic d'intérêt identifié et pour chaque composition de test, réalisation d'un calcul de corrélation entre les premiers points caractéristiques de référence et les premiers points caractéristiques de test et détermination d'une première valeur de corrélation de la composition pour ledit composé et ledit pic d'intérêt.

Lors de la détection de la présence ou non du composé dans la composition à identifier, ladite détection est également basée sur les premières valeurs de corrélation des compositions de test obtenues lors de l'étape d'étalonnage.

Le procédé de détection peut également comporter une étape d'estimation de la concentration de la composition à identifier en un desdits composés de référence, ceci notamment à partir de machine à vecteurs de support.

Une telle étape d'estimation de la concentration comprend les sous-étapes suivantes :

- calcul d'une somme de différences des valeurs du premier spectre de référence par les valeurs du premier spectre de mesure pour la ou l'ensemble des plages de longueurs d'onde d'intérêt dudit composé de référence,

- estimation de la concentration du composé de référence dans la composition à identifier à partir de la somme de différences des valeurs du premier spectre de référence et du premier spectre de mesure pour la ou l'ensemble des plages de longueurs d'onde d'intérêt dudit composé de référence.

**Revendications**

1. Procédé de détection de la présence d'au moins un composé dans une composition à identifier au moyen d'un spectromètre,
   le procédé comprenant les étapes suivantes :

   - réalisation d'au moins une mesure de spectrométrie d'au moins un échantillon de référence comportant ledit au moins un composé et fourniture à partir de ladite mesure de spectrométrie d'au moins un premier spectre de référence à une première résolution,
   - identification, pour le ou chacun des composés, d'au moins un premier pic d'intérêt à partir dudit ou desdits au moins un premier spectre de référence correspondant audit composé, le pic d'intérêt ayant une longueur d'onde d'intérêt,
   - extraction, pour le ou chaque composé et le ou chaque premier pic d'intérêt identifié pour ledit composé, de premiers points caractéristiques de référence dudit au moins un premier spectre de référence dans une plage de longueurs d'onde d'intérêt correspondant à l'au moins un premier pic d'intérêt et comprenant ladite première longueur d'onde d'intérêt,
   - réalisation d'une mesure de spectrométrie de la composition à identifier et fourniture d'au moins un premier spectre de mesure,
   - pour le ou chaque composé et pour le ou chaque premier pic d'intérêt identifié pour ledit composé, extraction de premier points caractéristiques de mesure du au moins un premier spectre de mesure dans la plage de longueurs d'onde d'intérêt comprenant ladite première longueur d'onde d'intérêt,
   - pour le ou chaque composé et le ou chaque pic d'intérêt identifié, réalisation d'un calcul de corrélation entre les premiers points caractéristiques de référence et les premiers points caractéristiques de mesure et détermination d'une première valeur de corrélation de la composition pour ledit composé et ledit pic d'intérêt,
   - détection de la présence ou non du composé dans la composition à identifier à partir de la première valeur de corrélation obtenue pour l'au moins un composé et de l'au moins un premier pic d'intérêt identifié pour ledit composé.

2. Procédé de détection selon la revendication 1 comprenant en outre une étape de calcul de valeurs caractéristiques du au moins un premier spectre de référence à partir d'une fonction de calcul caractéristique, et une étape de calcul de premières valeurs caractéristiques du au moins un premier spectre de mesure à partir de la fonction de calcul caractéristique,

   dans lequel les points caractéristiques de référence extraits lors de l'étape d'extraction de premiers points caractéristiques de référence sont extraits à partir des premières valeurs calculées lors de l'étape de calcul de valeurs caractéristiques du au moins un premier spectre de référence correspondant à ladite plage de longueurs d'onde d'intérêt,
   et dans lequel les points caractéristiques de mesure extraits lors de l'étape d'extraction de points caractéristiques de mesure du au moins un premier spectre de mesure sont extraits à partir des valeurs calculées lors de l'étape de calcul de valeurs caractéristiques du au moins un premier spectre de mesure correspondant à ladite plage de longueurs d'onde d'intérêt.

3. Procédé de détection selon la revendication 2, dans lequel la fonction de calcul caractéristique est une fonction dérivée.

4. Procédé de détection selon la revendication 2 ou 3, dans lequel l'étape de calcul de valeur caractéristique du au moins un premier spectre de référence à partir d'une fonction de calcul caractéristique est préalable à l'étape d'identification, pour le ou chacune des composés d'au moins un premier pic d'intérêt, l'identification de l'au moins un premier pic d'intérêt est réalisée à partir du résultat du calcul de valeurs caractéristiques.

5. Procédé de détection selon l'une quelconque des revendications 1 à 4, dans lequel lors de l'étape de réalisation d'au moins une mesure de spectrométrie d'au moins un échantillon de référence, il est prévu une sous-étape de modification de la résolution de manière à fournir pour chaque échantillon de référence au moins un deuxième spectre de référence présentant une deuxième résolution distincte de la première résolution,

dans lequel lors de l'étape d'identification d'au moins un premier pic d'intérêt, il est également identifié pour l'au moins un premier composé au moins un deuxième pic d'intérêt à partir dudit ou desdits au moins un deuxième spectre de référence correspondant audit composé,

dans lequel lors de l'étape d'extraction de premiers points caractéristiques de référence, il est également extrait, pour le ou chaque composé et le ou chaque deuxième pic d'intérêt identifié pour ledit composé, des deuxièmes points caractéristiques de référence,

dans lequel lors de l'étape de réalisation d'une mesure de spectrométrie de la composition à identifier, il est prévu une sous-étape de modification de la résolution de manière à fournir au moins un deuxième spectre de mesure présentant la deuxième résolution,

dans lequel, lors de l'étape d'extraction de premier points caractéristiques de mesure, il est également extrait des deuxièmes points caractéristiques de mesure du au moins un deuxième spectre de mesure dans la plage de longueurs d'onde d'intérêt comprenant une deuxième longueur d'onde dudit au moins un deuxième pic d'intérêt,

dans lequel lors de l'étape réalisation d'un calcul de corrélation, pour le ou chaque composé, il est également réalisé un calcul de corrélation entre les deuxièmes points caractéristiques de référence et les deuxièmes points caractéristiques de mesure et déterminé une deuxième valeur de corrélation du composé pour ledit composé et ledit deuxième pic d'intérêt,

dans lequel lors de l'étape de détection de la présence ou non du composé dans la composition à identifier, ladite détection est réalisée partir d'au moins les premières valeurs de corrélation et les deuxièmes valeurs de corrélation obtenues pour l'au moins un composé et le ou les premiers et deuxièmes pics d'intérêt identifiés pour ledit composé.

6. Procédé de détection selon l'une quelconque des revendications 1 à 5, dans lequel le spectromètre est sélectionné dans le groupe comprenant les spectromètres infra-rouge, les spectromètres Raman, les spectromètres de florescence X et les spectromètres gamma.

7. Procédé de détection selon l'une quelconque des revendications 1 à 6 comprenant une étape d'étalonnage préalable à l'étape de réalisation d'une mesure de spectrométrie de la composition, ladite étape préalable d'étalonnage comprenant les sous-étapes suivantes :

   - réalisation de mesures de spectroscopie d'une pluralité de compositions de tests connues et fourniture d'au moins un premier spectre de test pour chacune des compositions de test, pour le ou chaque composé, une première part desdites compositions de test comprenant ledit composé, une deuxième part desdites compositions de test étant dépourvue dudit composé, et
   - pour le ou chaque composé, pour le ou chaque premier pic d'intérêt identifié pour ledit composé et pour chaque composition de test, extraction de premiers points caractéristiques de test du au moins un premier spectre de test correspondant à la composition de test dans la plage de longueurs d'onde comprenant ledit au moins un premier pic d'intérêt,
   - pour le ou chaque composé, le ou chaque pic d'intérêt identifié et pour chaque composition de test, réalisation d'un calcul de corrélation entre les premiers points caractéristiques de référence et les premiers points caractéristiques de test et détermination d'une première valeur de corrélation de la composition de test pour ledit composé et ledit pic d'intérêt,

   dans lequel, lors de la détection de la présence ou non du composé dans la composition à identifier, ladite détection est également basée sur les premières valeurs de corrélation des compositions de test obtenues lors de l'étape d'étalonnage.

8. Procédé de détection selon la revendication 7, dans lequel l'étape de détection de la présence ou non du composé est réalisée à partir d'une machine à vecteurs de support.

9. Procédé de détection selon l'une quelconque des revendication 1 à 8 comprenant en outre, dans le cas où la présence du composé est détectée lors de l'étape de détection de la présence ou non du composé dans la composition à identifier, une étape d'estimation de la concentration du composé dans le composition à identifier, dans lequel l'étape d'estimation de la concentration comprend les sous-étapes suivantes :

   - calcul d'une somme de différences des valeurs du premier spectre de référence par les valeurs du premier spectre de mesure pour la ou l'ensemble des plages de longueurs d'onde d'intérêt dudit composé,
   - estimation de la concentration du composé dans la composition à
   identifier à partir de la somme de différences du premier spectre de référence par le premier spectre de mesure pour la ou l'ensemble des plages de longueurs d'onde d'intérêt dudit composé.

10. Procédé de détection selon l'une quelconque des revendications 1 à 8, dans lequel lors de l'étape de détection de la présence ou non du composé dans la composition il est fourni, en plus d'une indication de détection, au moins l'un parmi :

- un indice de confiance relatif à l'indication de détection donnée,
- une estimation d'une concentration du composé dans la composition.

11. Système de détection (1) de la présence d'au moins un composé dans une composition à identifier comprenant :

- un spectromètre (10),
- une unité de traitement (20) configurée pour traiter les mesures de spectrométrie fournies par le spectromètre,
- une unité de signalisation (30) configurée pour signaler de la détection de l'au moins un composé,
le système de détection (1) **étant caractérisé en ce que** l'unité de traitement (20) est configurée pour mettre en œuvre un procédé de détection selon l'une quelconque des revendications 1 à 10.

12. Système de détection selon la revendication 11, dans lequel l'unité de traitement (20) comprenant, dans au moins une configuration de l'unité de traitement (20) :

- au moins un module de détermination de pics d'intérêt (22A, 22B, 22C), le ou chaque module de détermination de pics d'intérêt (22A, 22B, 22C) étant configuré pour déterminer un ou plusieurs pics d'intérêt et une à plusieurs plages de longueurs d'onde d'intérêt, chacune associée à chaque pic d'intérêt respectif d'au moins un premier spectre de référence,
- au moins un module d'extraction de points caractéristiques (24A, 24B, 24C), chaque module d'extraction de points caractéristiques (24A, 24B, 24C) étant configuré pour extraire les points caractéristiques de référence de l'au moins un premier spectre de référence à une première résolution à partir des pics d'intérêts et des plages de longueurs d'onde d'intérêt fournies par le module de détermination de pics d'intérêt (22A, 22B, 22C) correspondant,
- un module de calcul (25) adapté pour mémoriser les points caractéristiques de référence extraits par le ou chacun des modules d'extraction de points caractéristiques (24A, 24B, 24C) afin de permettre un calcul de corrélation avec les points caractéristiques de mesure, soit pour enregistrer dans l'unité de stockage (40) les points caractéristiques de référence extraits,
l'unité de traitement comprenant une deuxième configuration de l'unité de traitement (20) dans laquelle.
- l'au moins un module d'extraction de points caractéristiques (24A, 24B, 24C) est configuré pour extraire les points caractéristiques de mesure de l'au moins un premier spectre de mesure à une première résolution à partir des pics d'intérêts et des plages de longueurs d'onde d'intérêt de l'au moins un composé,
- le module de calcul (25) est configuré pour, pour chaque composé de référence et le ou chaque pic d'intérêt identifié pour ledit composé, réaliser un calcul de valeur de corrélation entre les premiers points caractéristiques de référence dudit composé et les premiers points caractéristiques de mesure et déterminer une première valeur de corrélation de la composition pour ledit composé et ledit pic d'intérêt, le module de calcul étant également configuré pour détecter la présence ou non de chacun des composés de référence à partir de la première valeur de corrélation.

13. Système de détection selon la revendication 11 ou 12, dans lequel l'unité de traitement comprend une unité de stockage (40) configurée pour stocker au moins l'un parmi :

- au moins un premier spectre de référence d'au moins un échantillon de référence comportant ledit au moins un composé,
- des valeurs caractéristiques de référence et les informations concernant au moins un premier pic d'intérêt obtenus au moyen d'au moins un premier spectre de référence d'au moins un échantillon de référence comportant ledit au moins un composé,
- des premiers points caractéristiques de référence et les plages de longueurs d'onde d'intérêt respectives correspondant à au moins un premier pic d'énergie d'intérêt
d'au moins un premier spectre de référence d'au moins un échantillon de référence comportant ledit au moins un composé,
- au moins un spectre de test d'au moins une composition de test,
- des valeurs caractéristiques de test d'au moins une composition, de test,

- des premiers points caractéristiques de test d'au moins une composition de test.

14. Support de données lisible par ordinateur sur lequel est enregistré un programme incluant les instructions pour exécuter des étapes du procédé de détection selon l'une quelconque des revendications 1 à 10.

**Patentansprüche**

1. Verfahren zum Nachweis des Vorliegens mindestens einer Verbindung in einer zu identifizierenden Zusammensetzung mittels eines Spektrometers,
   wobei das Verfahren die folgenden Schritte umfasst:

   - Durchführen mindestens einer spektrometrischen Messung an mindestens einer Referenzprobe, die die mindestens eine Verbindung umfasst, und Bereitstellen mindestens eines ersten Referenzspektrums mit einer ersten Auflösung aus der spektrometrischen Messung,
   - Identifizieren mindestens eines ersten Peaks von Interesse aus dem oder den mindestens einen Referenzspektrum für die oder jede der Verbindungen, der der Verbindung entspricht, wobei der Peak von Interesse eine Wellenlänge von Interesse aufweist,
   - Extrahieren von ersten charakteristischen Referenzpunkten des mindestens einen ersten Referenzspektrums in einem Bereich von Wellenlängen von Interesse, der dem mindestens einen ersten Peak von Interesse entspricht und die erste Wellenlänge von Interesse umfasst, für die oder jede Verbindung und den oder jeden ersten Peak von Interesse, der für die Verbindung identifiziert wurde,
   - Durchführen einer spektrometrischen Messung an der zu identifizierenden Zusammensetzung und Bereitstellen von mindestens einem ersten Messspektrum,
   - für die oder jede Verbindung und für den oder jeden ersten Peak von Interesse, der für die Verbindung identifiziert wurde, Extrahieren von ersten charakteristischen Messpunkten des mindestens einen ersten Messspektrums in dem Bereich von Wellenlängen von Interesse, der die erste Wellenlänge von Interesse umfasst,
   - für die oder jede Verbindung und den oder jeden identifizierten Peak von Interesse Durchführen einer Berechnung einer Korrelation zwischen den ersten charakteristischen Referenzpunkten und den ersten charakteristischen Messpunkten und Bestimmen eines ersten Korrelationswerts der Zusammensetzung für die Verbindung und den Peak von Interesse,
   - Nachweisen des Vorliegens oder Nichtvorliegens der Verbindung in der zu identifizierenden Zusammensetzung aus dem ersten Korrelationswert, der für die mindestens eine Verbindung und den mindestens einen ersten Peak von Interesse, der für die Verbindung identifiziert wurde, erhalten wurde.

2. Nachweisverfahren nach Anspruch 1, weiterhin umfassend einen Schritt eines Berechnens von charakteristischen Werten des mindestens einen ersten Referenzspektrums aus einer charakteristischen Berechnungsfunktion und einen Schritt eines Berechnens von ersten charakteristischen Werten des mindestens einen ersten Messspektrums aus der charakteristischen Berechnungsfunktion,

   wobei die charakteristischen Referenzpunkte, die während des Schritts des Extrahierens von ersten charakteristischen Referenzpunkten des mindestens einen ersten Referenzspektrums extrahiert werden, aus während des Schritts des Berechnens von charakteristischen Werten des mindestens einen ersten Referenzspektrums, das dem Bereich von Wellenlängen von Interesse entspricht, berechneten ersten Werten extrahiert werden, und wobei die charakteristischen Messpunkte, die während des Schritts des Extrahierens von charakteristischen Messpunkten des mindestens einen ersten Messspektrums extrahiert werden, aus während des Schritts des Berechnens von charakteristischen Werten des mindestens einen ersten Messspektrums, das dem Bereich von Wellenlängen von Interesse entspricht, berechneten Werten extrahiert werden.

3. Nachweisverfahren nach Anspruch 2, wobei die charakteristische Berechnungsfunktion eine abgeleitete Funktion ist.

4. Nachweisverfahren nach Anspruch 2 oder 3, wobei der Schritt des Berechnens eines charakteristischen Werts des mindestens einen ersten Referenzspektrums aus einer charakteristischen Berechnungsfunktion dem Schritt des Identifizierens mindestens eines ersten Peaks von Interesse für die oder jede der Verbindungen vorangeht, wobei das Identifizieren des mindestens einen ersten Peaks von Interesse aus dem Ergebnis des Berechnens von charakteristischen Werten durchgeführt wird.

5. Nachweisverfahren nach einem der Ansprüche 1 bis 4, wobei während des Schritts des Durchführens mindestens einer spektrometrischen Messung an mindestens einer Referenzprobe ein Unterschritt eines Modifizierens der Auflösung, um für jede Referenzprobe mindestens ein zweites Referenzspektrum bereitzustellen, das eine zweite Auflösung aufweist, die sich von der ersten Auflösung unterscheidet, vorgesehen ist,

wobei während des Schritts des Identifizierens mindestens eines ersten Peaks von Interesse außerdem für mindestens eine erste Verbindung mindestens ein zweiter Peak von Interesse aus dem oder den mindestens einen zweiten Referenzspektrum, der der Verbindung entspricht, identifiziert wird,

wobei während des Schritts des Extrahierens von ersten charakteristischen Referenzpunkten außerdem für die oder jede Verbindung und den oder jeden zweiten Peak von Interesse, der für die Verbindung identifiziert wurde, zweite charakteristische Referenzpunkte extrahiert werden,

wobei während des Schritts des Durchführens einer spektrometrischen Messung an der zu identifizierenden Verbindung ein Unterschritt eines Modifizierens der Auflösung, um mindestens ein zweites Messspektrum bereitzustellen, das die zweite Auflösung aufweist, vorgesehen ist,

wobei während des Schritts des Extrahierens von ersten charakteristischen Messpunkten außerdem zweite charakteristische Messpunkte des mindestens einen zweiten Messspektrums in dem Bereich von Wellenlängen von Interesse, der eine zweite Wellenlänge des mindestens einen zweiten Peaks von Interesse umfasst, extrahiert werden,

wobei während des Schritts des Durchführens einer Korrelationsberechnung für die oder jede Verbindung außerdem eine Berechnung einer Korrelation zwischen den zweiten charakteristischen Referenzpunkten und den zweiten charakteristischen Messpunkten durchgeführt wird und ein zweiter Korrelationswert der Verbindung für die Verbindung und den zweiten Peak von Interesse bestimmt wird,

wobei während des Schritts des Nachweisens des Vorliegens oder Nichtvorliegens in der zu identifizierenden Zusammensetzung das Nachweisen aus mindestens den ersten Korrelationswerten und den zweiten Korrelationswerten, die für die mindestens eine Verbindung und den oder die ersten und zweiten Peaks von Interesse, die für die Verbindung identifiziert wurden, erhalten wurden, durchgeführt wird.

6. Nachweisverfahren nach einem der Ansprüche 1 bis 5, wobei das Spektrometer in der Gruppe umfassend Infrarotspektrometer, Raman-Spektrometer, Röntgenfluoreszenzspektrometer und Gammaspektrometer ausgewählt ist.

7. Nachweisverfahren nach einem der Ansprüche 1 bis 6, umfassend einen Schritt eines Kalibrierens, der dem Schritt des Durchführens einer spektrometrischen Messung an der Zusammensetzung vorangeht, wobei der vorherige Schritt des Kalibrierens die folgenden Unterschritte umfasst:

- Durchführen von spektroskopischen Messungen an mehreren bekannten Testzusammensetzungen und Bereitstellen eines ersten Teils der Testzusammensetzungen, die die Verbindung umfassen, aus mindestens einem ersten Testspektrum für jede der Testzusammensetzungen für die oder jede Verbindung, wobei einem zweiten Teil der Testzusammensetzungen die Verbindung fehlt, und

- für die oder jede Verbindung, für den oder jeden ersten Peak von Interesse, der für die Verbindung identifiziert wurde, und für jede Testzusammensetzung Extrahieren von ersten charakteristischen Testpunkten des mindestens einen ersten Testspektrums, das der Testzusammensetzung entspricht, in dem Bereich von Wellenlängen, der den mindestens einen ersten Peak von Interesse umfasst,

- für die oder jede Verbindung, den oder jeden identifizierten Peak von Interesse und für jede Testzusammensetzung Durchführen einer Berechnung einer Korrelation zwischen den ersten charakteristischen Referenzpunkten und den ersten charakteristischen Testpunkten und Bestimmen eines ersten Korrelationswerts der Testzusammensetzung für die Verbindung und den Peak von Interesse,

wobei während des Nachweisens des Vorliegens oder Nichtvorliegens der Verbindung in der zu identifizierenden Zusammensetzung das Nachweisen außerdem auf den ersten Korrelationswerten von Testzusammensetzungen, die während des Schritts des Kalibrierens erhalten wurden, basiert.

8. Nachweisverfahren nach Anspruch 7, wobei der Schritt des Nachweisens des Vorliegens oder Nichtvorliegens der Verbindung aus einer Support Vector Machine durchgeführt wird.

9. Nachweisverfahren nach einem der Ansprüche 1 bis 8, weiterhin umfassend in dem Fall, in dem das Vorliegen der Verbindung während des Schritts des Nachweisens des Vorliegens oder Nichtvorliegens der Verbindung in der zu identifizierenden Zusammensetzung nachgewiesen wird, ein Schritt eines Schätzens der Konzentration der Verbindung in der zu identifizierenden Zusammensetzung,

wobei der Schritt des Schätzens der Konzentration die folgenden Unterschritte umfasst:

- Berechnen einer Summe von Differenzen von Werten des ersten Referenzspektrums zu den Werten des ersten Messspektrums für den oder die Gesamtheit von Bereichen von Wellenlängen von Interesse der Verbindung,
- Schätzen der Konzentration der Verbindung in der zu identifizierenden Zusammensetzung aus der Summe von Differenzen des ersten Referenzspektrums zu dem ersten Messspektrum für den oder die Gesamtheit von Bereichen von Wellenlängen von Interesse der Verbindung.

10. Nachweisverfahren nach einem der Ansprüche 1 bis 8, wobei während des Schritts des Nachweisens des Vorliegens oder Nichtvorliegens der Verbindung in der Zusammensetzung neben einer Nachweisangabe mindestens einer bzw. eine der folgenden bereitgestellt wird:

- ein relativer Konfidenzindex der gegebenen Nachweisangabe,
- eine Schätzung einer Konzentration der Verbindung in der Zusammensetzung.

11. System (1) zum Nachweis des Vorliegens mindestens einer Verbindung in einer zu identifizierenden Zusammensetzung, umfassend:

- ein Spektrometer (10),
- eine Verarbeitungseinheit (20), die zum Verarbeiten der spektrometrischen Messungen, die von dem Spektrometer bereitgestellt werden, konfiguriert ist,
- eine Signalisierungseinheit (30), die zum Signalisieren des Nachweises der mindestens einen Verbindung konfiguriert ist,
wobei das Nachweissystem (1) **dadurch gekennzeichnet ist, dass** die Verarbeitungseinheit (20) zum Umsetzen eines Nachweisverfahrens nach einem der Ansprüche 1 bis 10 konfiguriert ist.

12. Nachweissystem nach Anspruch 11, wobei die Verarbeitungseinheit (20) in mindestens einer Konfiguration der Verarbeitungseinheit (20) umfasst:

- mindestens ein Modul zur Bestimmung von Peaks von Interesse (22A, 22B, 22C), wobei das oder jedes Modul zur Bestimmung von Peaks von Interesse (22A, 22B, 22C) zum Bestimmen eines oder mehrerer Peaks von Interesse und eines bis zu mehreren Bereichen von Wellenlängen von Interesse konfiguriert ist, von denen jeder mit jedem jeweiligen Peak von Interesse mindestens eines ersten Referenzspektrums assoziiert ist,
- mindestens ein Modul zur Extraktion von charakteristischen Punkten (24A, 24B, 24C), wobei jedes Modul zur Extraktion von charakteristischen Punkten (24A, 24B, 24C) zum Extrahieren der charakteristischen Referenzpunkte des mindestens einen ersten Referenzspektrums mit einer ersten Auflösung aus Peaks von Interesse und Bereichen von Wellenlängen von Interesse, die von dem Modul zur Bestimmung von Peaks von Interesse (22A, 22B, 22C) bereitgestellt wurden, konfiguriert ist,
- ein Berechnungsmodul (25), das zum Speichern der charakteristischen Referenzpunkte, die durch das oder jedes der Module zur Extraktion von charakteristischen Punkten (24A, 24B, 24C) extrahiert wurden, um eine Berechnung einer Korrelation mit den charakteristischen Messpunkten zu ermöglichen, oder zum Registrieren der extrahierten charakteristischen Referenzpunkte in der Speichereinheit (40) eingerichtet ist,
wobei die Verarbeitungseinheit eine zweite Konfiguration der Verarbeitungseinheit (20) umfasst, in der:
- das mindestens eine Modul zur Extraktion von charakteristischen Punkten (24A, 24B, 24C) zum Extrahieren der charakteristischen Messpunkte des mindestens einen ersten Messspektrums mit einer ersten Auflösung aus Peaks von Interesse und Bereichen von Wellenlängen von Interesse der mindestens einen Verbindung konfiguriert ist,
- das Berechnungsmodul (25) zum Durchführen einer Berechnung eines Werts einer Korrelation zwischen den ersten charakteristischen Referenzpunkten der Verbindung und den ersten charakteristischen Messpunkten für jede Referenzverbindung und den oder jeden Peak von Interesse, der für die Verbindung identifiziert wurde, und Bestimmen eines ersten Korrelationswerts der Zusammensetzung für die Verbindung und den Peak von Interesse konfiguriert ist, wobei das Berechnungsmodul außerdem zum Nachweisen des Vorliegens oder Nichtvorliegens jeder der Referenzverbindungen aus dem ersten Korrelationswert konfiguriert ist.

13. Nachweissystem nach Anspruch 11 oder 12, wobei die Verarbeitungseinheit eine Speichereinheit (40) umfasst, die zum Speichern von mindestens einem der folgenden konfiguriert ist:

- mindestens einem ersten Referenzspektrum mindestens einer Referenzprobe, die die mindestens eine Verbindung umfasst,

- charakteristischen Referenzpunkten und den Informationen in Bezug auf mindestens einen ersten Peak von Interesse, die mittels mindestens eines ersten Referenzspektrums mindestens einer Referenzprobe, die die mindestens eine Verbindung umfasst, erhalten werden,
- ersten charakteristischen Referenzpunkten und jeweiligen Bereichen von Wellenlängen von Interesse, die mindestens einem ersten Energie-Peak von Interesse mindestens eines ersten Referenzspektrums mindestens einer Referenzprobe, die die mindestens eine Verbindung umfasst, entsprechen,
- mindestens einem Testspektrum mindestens einer Testzusammensetzung,
- charakteristischen Testwerten mindestens einer Testzusammensetzung,
- ersten charakteristischen Testpunkten mindestens einer Testzusammensetzung.

14. Computerlesbarer Datenträger, auf dem ein Programm aufgezeichnet ist, das die Anweisungen zum Ausführen des Nachweisverfahrens nach einem der Ansprüche 1 bis 10 beinhaltet.

**Claims**

1. A method for detecting the presence of at least one compound in a composition to be identified by means of a spectrometer,
the method comprising the following steps of:

   - performing at least one spectrometry measurement of at least one reference sample including said at least one compound and providing from said spectrometry measurement at least one reference spectrum at a first resolution,
   - identifying, for the or each of the compounds, at least one first peak of interest from said at least one first reference spectrum corresponding to said compound, the peak of interest having a wavelength of interest,
   - extracting, for the or each compound and the or each peak of interest identified for said compound, first reference characteristic points from said at least one first reference spectrum in a wavelength range of interest corresponding to the at least one first peak of interest and comprising said first wavelength of interest,
   - performing a spectrometry measurement of the composition to be identified and providing at least one first measurement spectrum,
   - for the or each compound and for the or each first peak of interest identified for said compound, extracting first measurement characteristic points of the at least one first measurement spectrum in the wavelength range of interest comprising said first wavelength of interest,
   - for the or each compound and the or each first peak of interest identified, performing a correlation calculation between the first reference characteristic points and the first measurement characteristic points and determining a first correlation value of the composition for said compound and said peak of interest,
   - detecting the presence or not of the compound in the composition to be identified from the first correlation value obtained for the at least one compound and from the at least one first peak of interest identified for said compound.

2. The detection method according to claim 1, further comprising a step of calculating characteristic values of the at least one first reference spectrum from a characteristic calculation function, and a step of calculating first characteristic values of the at least one first measurement spectrum from the characteristic calculation function,

   wherein the reference characteristic points extracted in the step of extracting first reference characteristic points are extracted from the first values calculated in the step of calculating characteristic values of the at least one first reference spectrum corresponding to said wavelength range of interest,
   and wherein the measurement characteristic points extracted in the step of extracting measurement characteristic points of the at least one first measurement spectrum are extracted from the values calculated in the step of calculating characteristic values of the at least one first measurement spectrum corresponding to said wavelength range of interest.

3. The detection method according to claim 2, wherein the characteristic calculation function is a derivative function.

4. The detection method according to claim 2 or 3, wherein the step of calculating a characteristic value of the at least one first reference spectrum from a characteristic calculation function is prior to the step of identifying, for the or each of the compounds of at least one first peak of interest, the identification of the at least one first peak of interest is performed from the calculation result of characteristic values.

5. The detection method according to any of claims 1 to 4, wherein in the step of performing at least one spectrometry measurement of at least one reference sample, there is provided a sub-step of modifying the resolution so as to provide, for each reference sample, at least one second reference spectrum having a second resolution distinct from the first resolution,

wherein in the step of identifying at least one first peak of interest, for the at least one first compound, at least one second peak of interest is also identified from said at least one second reference spectrum corresponding to said compound,

wherein in the step of extracting first reference characteristic points, for the or each compound and the or each second peak of interest identified for said compound, second reference characteristic points are also extracted,

wherein in the step of performing a spectrometry measurement of the composition to be identified, there is provided a sub-step of modifying the resolution so as to provide at least one second measurement spectrum having the second resolution,

wherein, in the step of extracting first measurement characteristic points, second measurement characteristic points are also extracted from the at least one second measurement spectrum in the wavelength range of interest comprising a second wavelength of said at least one second peak of interest,

wherein in the step of performing a correlation calculation, for the or each compound, additionally a correlation calculation between the second reference characteristic points and the second measurement characteristic points is performed, and a second correlation value of the compound for said compound and said second peak of interest is determined,

wherein, in the step of detecting the presence or not of the compound in the composition to be identified, said detection is performed at least from the first correlation values and the second correlation values obtained for the at least one compound and the first and second peak(s) of interest identified for said compound.

6. The detection method according to any of claims 1 to 5, wherein the spectrometer is selected from the group comprising infrared spectrometers, Raman spectrometers, X-ray fluorescence spectrometer and gamma spectrometers.

7. The detection method according to any of claims 1 to 6, comprising a calibration step prior to the step of performing a spectrometry measurement of the composition, said prior calibration step comprising the following sub-steps of:

- performing spectrometry measurements of a plurality of known test compositions and providing at least one first test spectrum for each of the test compositions, for the or each compound, a first part of said test compositions comprising said compound, a second part of said test compositions being free of said compound, and
- for the or each compound, for the or each first peak of interest identified for said compound and for each test composition, extracting first test characteristic points of the at least one first test spectrum corresponding to the test composition in the wavelength range comprising said at least one first peak of interest,
- for the or each compound, the or each peak of interest identified and for each test composition, performing a correlation calculation between the first reference characteristic points and the first test characteristic points and determining a first correlation value of the test composition for said compound and said peak of interest, wherein, during the detection of the presence or not of the compound in the composition to be identified, said detection is also based on the first correlation values of the test composition obtained in the calibration step.

8. The detection method according to claim 7, wherein the step of detecting the presence or not of the compound is performed from a support vector machine.

9. The detection method according to any of claims 1 to 8 further comprising, in the case where the presence of the compound is detected in the step of detecting the presence or not of the compound in the composition to be identified, a step of estimating a concentration of the compound in the composition to be identified, wherein the step of estimating the concentration comprising the following sub-steps of:

- calculating a sum of differences of the values of the first reference spectrum by the values of the first measurement spectrum for the or all the wavelength range(s) of interest of said compound,
- estimating the concentration of the compound in the composition to be identified from the sum of differences of the first reference spectrum by the first measurement spectrum for the or all the wavelength range(s) of interest of said compound.

10. The detection method according to any of claims 1 to 8, wherein in the step of detecting the presence or not of the compound in the composition there is provided, in addition to a detection indication, at least one of:

- a confidence index relating to the given detection indication,
- an estimation of a concentration of the compound in the composition.

**11.** A system (1) for detecting the presence of at least one compound in a composition to be identified comprising:

- a spectrometer (10),
- a processing unit (20) configured to process spectrometry measurements provided by the spectrometer,
- a signalling unit (30) configured to signal the detection of the at least one compound,
the detection system (1) being **characterised in that** the processing unit (20) is configured to implement a detection method according to any of claims 1 to 10.

**12.** The detection system according to claim 11, wherein the processing unit (20) comprises, in at least one configuration of the processing unit (20):

- at least one peak of interest determination module (22A, 22B, 22C), the or each peak of interest determination module (22A, 22B, 22C) being configured to determine one or more peaks of interest and one or more wavelength ranges of interest, each being associated with each respective peak of interest of at least one first reference spectrum,
- at least one characteristic point extraction module (24A, 24B, 24C), each characteristic point extraction module (24A, 24B, 24C) being configured to extract the reference characteristic points of the at least one first reference spectrum at a first resolution from the peaks of interest and the wavelength ranges of interest provided by the corresponding peak of interest determination module (22A, 22B, 22C),
- a calculation module (25) adapted to store the reference characteristic points extracted for the or each of the characteristic points extraction modules (24A, 24B, 24C) in order to enable correlation calculation with the measurement characteristic points, or to record, in the storage unit (40), the reference characteristic points extracted,
the processing unit comprising a second configuration of the processing unit (20) in which:

- the at least one characteristic point extraction module (24A, 24B, 24C) is configured to extract the measurement characteristic points of the at least one first measurement spectrum at a first resolution from the peaks of interest and the wavelength ranges of interest of the at least one compound,
- the calculation module (25) is configured to, for each reference compound and the or each peak of interest identified for said compound, perform a calculation of correlation value between the first reference characteristic points of said compound and the first measurement characteristic points and determine a first correlation value of the composition for said compound and said peak of interest, the calculation module being also configured to detect the presence or not of each of the reference compounds from the first correlation value.

**13.** The detection system according to claim 11 or 12, wherein the processing unit comprises a storage unit (40) configured to store at least one of:

- at least one first reference spectrum of at least one reference sample including said at least one compound,
- reference characteristic values and information regarding at least one first peak of interest obtained by means of at least one first reference spectrum of at least one reference sample including said at least one compound,
- first reference characteristic points and the respective wavelength ranges of interest corresponding to at least one first energy peak of interest of at least one first reference spectrum of at least one reference sample including said at least one compound,
- at least one test spectrum of at least one test composition,
- test characteristic values of at least one test composition,
- first test characteristic points of at least one test composition.

**14.** A computer readable data medium having recorded thereon a programme including instructions to carry out the steps of the detection method according to any of claims 1 to 10.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

**RÉFÉRENCES CITÉES DANS LA DESCRIPTION**

**Documents brevets cités dans la description**

- US 6379920 B

- US 20180059011 A1

**Littérature non-brevet citée dans la description**

- **N.A. NGO-THI.** *Journal of Molecular Structure,* 2003, 371-380

- **D. HELM.** *Journal of General Microbiology,* Septembre 1990, vol. 137, 69-79